# EUROPEAN PATENT APPLICATION

(11) **EP 4 131 708 A1**
(43) Date of publication of application: **08.02.2023**
(21) Application number: 21777114.6
(22) Date of filing: 25.03.2021
(51) Int. Cl.: H02J 7/00, H01M 10/44

(54) **ELECTRIC VEHICLE AND BATTERY SYSTEM**

(30) Priority: 26.03.2020 CN 202010222359; 26.03.2020 CN 202010222174; 26.03.2020 CN 202020399165 U; 27.03.2020 CN 202010227225; 27.04.2020 CN 202010341659; 02.06.2020 CN 202010489646; 16.10.2020 CN 202011107782; 14.01.2021 CN 202110048184
(71) Applicant: Globe (Jiangsu) Co., Ltd., Changzhou, Jiangsu 213023 (CN)
(72) Inventor: WANG, Wenwei, Changzhou, Jiangsu 213023 (CN); WEI, Qunli, Changzhou, Jiangsu 213023 (CN); XUE, Jiafu, Changzhou, Jiangsu 213023 (CN); SHI, Dongdong, Changzhou, Jiangsu 213023 (CN); CHEN, Hui, Changzhou, Jiangsu 213023 (CN); ZHAO, Peng, Changzhou, Jiangsu 213023 (CN); SHI, Qinghua, Changzhou, Jiangsu 213023 (CN)
(74) Representative: Bergenstråhle & Partners AB
(86) International application number: PCT/CN2021/083071
(87) International publication number: WO 2021/190612

(57) **Abstract**

The present disclosure provides an electric vehicle, including: a main body; a first power consumption unit and a second power consumption unit connected to the main body, respectively; a battery system, including a first power supply unit and a second power supply unit, and the first power supply unit and the second power supply unit each include at least one battery pack, the first power supply unit supplies power to the first power consumption unit, and the second power supply unit supplies power to the second power consumption unit; the at least one battery pack supplies power to a handheld tool.

## Description

### FIELD OF TECHNOLOGY

The present disclosure relates to the technical field of garden equipment, in particular, to an electric vehicle and a battery system.

### BACKGROUND

The battery packs used for lithium-ion ride-on garden tools currently on the market usually include a large battery pack or several combined small battery packs. The output energy of the battery packs is used for walking and mowing of garden tools, or for other accessories. With this setting, if one battery pack or one of the several combined battery packs is damaged, the power supply of the whole machine will be abnormal and the machine cannot be driven, and the operator will not be able to operate the machine outdoors. As a result, when garden tools are sent to designated transportation points or repaired, they can only rely on manual or other tools to transport machines, which damages the user experience of garden tools.

### SUMMARY

The present disclosure provides an electric vehicle, including: a main body; a first power consumption unit and a second power consumption unit connected to the main body, respectively; and a battery system, including a first power supply unit and a second power supply unit, the first power supply unit and the second power supply unit each includes at least one battery pack, the first power supply unit supplies power to the first power consumption unit, and the second power supply unit supplies power to the second power consumption unit; the at least one battery pack supplies power to a handheld tool.

The present disclosure provides a battery system, including: a first power supply unit, supplying power to the first power consumption unit; and a second power supply unit, supplying power to the second power consumption unit; the first power supply unit and the second power supply unit both include at least one battery pack for supplying power to a handheld tool.

In summary, the present disclosure proposes an electric vehicle and a battery system. By providing a battery system on the electric vehicle, the battery system can include different power supply units, and different power supply units can supply power to different power consumption units, thus avoiding the abnormal use of the battery system due to the damage of the battery pack in the single power supply unit, thereby making the electric vehicle convenient to use, having high use efficiency and a good user experience.

### BRIEF DESCRIPTION OF THE DRAWINGS

Fig. 1 is a schematic view of the three-dimensional structure of a ride-on electric tool according to the present disclosure.
Fig. 2 is a schematic view of the three-dimensional structure of the ride-on electric tool shown in Fig. 1 from another angle.
Fig. 3 is a schematic view of the cooperation of a driving mechanism and an operating unit.
Fig. 4 is a schematic structural view of a first handle.
Fig. 5 is a schematic view of the cooperation between a support arm and a first brake line.
Fig. 6 is a partially enlarged view of Fig. 3.
Fig. 7 is a three-dimensional schematic view of an electric vehicle according to the present disclosure.
Fig. 8 is a perspective schematic view of the electric vehicle shown in Fig. 7 from another angle.
Fig. 9 is a schematic view of the bottom of the electric vehicle shown in Fig. 7.
Fig. 10 is a perspective schematic view of the electric vehicle shown in Fig. 7 with the working mechanism removed.
Fig. 11 is a perspective schematic view of the electric vehicle shown in Fig. 7 from another angle with the working mechanism removed.
Fig. 12 is a perspective schematic view of the electric vehicle shown in Fig. 7 with the working mechanism and the housing removed.
Fig. 13 is a perspective schematic view of a rear drive assembly and a pivotal assembly.
Fig. 14 is a perspective schematic view of a rear drive assembly and a pivotal assembly from another angle.
Fig. 15 is a three-dimensional schematic view of an electric tool according to the present disclosure.
Fig. 16 is a schematic structural view of Fig. 15 without the seat assembly.
Fig. 17 is a schematic structural view of the working assembly in Fig. 15.
Fig. 18 is a schematic structural view of the drive wheel assembly in Fig. 15.
Fig. 19 is a schematic structural view of the distributed battery management system in Fig. 16.
Fig. 20 is a three-dimensional schematic view of a hand-held garden tool suitable for the battery pack in Fig. 19.
Fig. 21 is a working principle view of the distributed battery management system in Fig. 19 during charging.
Fig. 22 is a control principle view of the electric tool in Fig. 15.
Fig. 23 is a structural block view of an energy management system according to the present disclosure.
Fig. 24 is a control principle view of an energy management system according to the present disclosure.
Fig. 25 is a flowchart of an energy management method according to the present disclosure.
Fig. 26 is a structural block view of the energy management method of step S3 in Fig. 25.
Fig. 27 is a schematic structural view of an electric tool according to the present disclosure.
Fig. 28 is a schematic structural view of the electric tool of which part of the structure is omitted in Fig. 27.
Fig. 29 is a schematic disassembly view of the tool system in Fig. 27.
Fig. 30 is a schematic structural view of the tool system in Fig. 27 from another angle.
Fig. 31 is a schematic structural view of the tool assembly in Fig. 27.
Fig. 32 is a schematic structural view of the battery assembly in Fig. 27.
Fig. 33 is a control principle view of the electric tool in Fig. 27.
Fig. 34 is a schematic structural view of the electric tool according to the present disclosure.
Fig. 35 is a schematic view of the circuit between a power supply component and a drive component according to the present disclosure.
Fig. 36 is a connection structure block view of a power management unit, a power supply component, and a drive component according to the present disclosure.
Fig. 37 is a flow chart of judgment when a power management unit is working according to the present disclosure.
Fig. 38 is a schematic view of modules of a battery assembly management device according to the present disclosure.
Fig. 39 is a schematic flow chart of a battery assembly management method according to the present disclosure.
Fig. 40 is a schematic flowchart of step S1.
Fig. 41 is a schematic flowchart of step S1 according to another embodiment.
Fig. 42 is a schematic flowchart of step S1 according to another embodiment.
Fig. 43 is a schematic structural view of an electric vehicle.
Fig. 44 is a schematic view of modules of a charger according to the present disclosure.
Fig. 45 is a schematic flowchart of a charger control method according to an embodiment of the present disclosure.
Fig. 46 is a schematic view of the cooperation between a charger and a battery assembly according to an embodiment of the present disclosure.
Fig. 47 is a three-dimensional schematic view of the charger shown in Fig. 46.
Fig. 48 is a flowchart of a charging control method according to the present disclosure.
Fig. 49 is a schematic flowchart of a charger control method according to an embodiment of the present disclosure.
Fig. 50 is a schematic flowchart of a charger control method according to another embodiment of the present disclosure.
Fig. 51 is a flowchart of a charging control method according to the present disclosure.
Fig. 52 is a schematic view of a three-dimensional structure of an electric tool.

### DETAILED DESCRIPTION

The embodiments of the present disclosure will be described below through exemplary embodiments. Those skilled in the art can easily understand other advantages and effects of the present disclosure according to contents disclosed by the specification. The present disclosure can also be implemented or applied through other different exemplary embodiments. Various modifications or changes can also be made to all details in the specification based on different points of view and applications without departing from the spirit of the present disclosure.

It needs to be stated that the drawings provided in the following embodiments are just used for schematically describing the basic concept of the present disclosure, thus only illustrating components only related to the present disclosure and are not drawn according to the numbers, shapes and sizes of components during actual implementation, the configuration, number and scale of each component during actual implementation thereof may be freely changed, and the component layout configuration thereof may be more complicated.

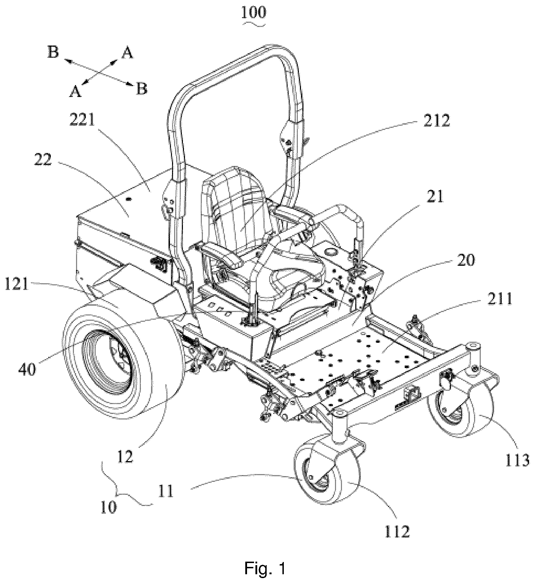

As shown in Figs. 1 to 3, the present disclosure discloses a ride-on electric tool 100. The ride-on electric tool 100 includes a walking wheel assembly 10, a main body 20 supported by the walking wheel assembly 10, a working assembly (not shown) mounted to the main body 20 to perform the function of the ride-on electric tool 100, a driving mechanism 30 for driving the walking wheel assembly 10 to work, and an operating unit 40.

As shown in Figs. 1 to 3, the walking wheel assembly 10 includes a front wheel 11 and a rear wheel 12 arranged opposite to the front wheel 11 and matched with the driving mechanism 30. The front wheel 11 includes a front axle 111, and a first front wheel 112 and a second front wheel 113 installed at two ends of the front axle 111, respectively. The rear wheel 12 includes a first rear wheel 121 and a second rear wheel 122 opposite to the first rear wheel 121.

As shown in Figs. 1 to 2, the main body 20 is mounted on the walking wheel assembly 10, and includes a base portion 21 and a tail portion 22. The base portion 21 is located between the front wheel 11 and the rear wheel 12, and the tail portion 22 is disposed on the side of the rear wheel 12 facing away from the front wheel 11. The base portion 21 is provided with a pedal 211 and a seat 212. The pedal 211 is located on the side of the base portion 21 away from the tail portion 22 for the user to step on. The seat 212 is located between the pedal 211 and the tail portion 22. The tail portion 22 includes a receiving cavity 221 for receiving various tools, parts and the like. The working assembly is installed on the side of the base portion 21 facing away from the seat 212 to perform the functions of the ride-on electric tool 100. In this embodiment, the working assembly includes a blade for mowing grass.

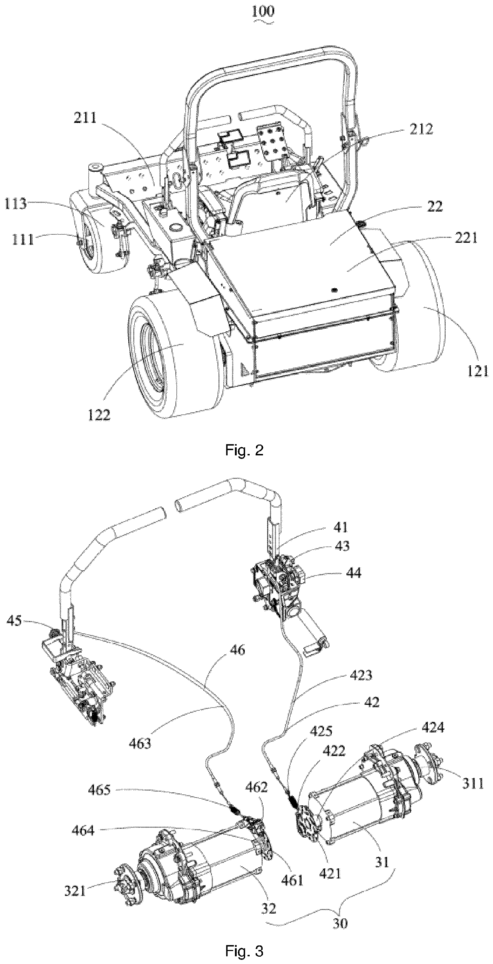

As shown in Fig. 3, the driving mechanism 30 is used to drive the rear wheel 12 to rotate, and includes a first motor 31 and a second motor 32 disposed opposite to the first motor 31. The first motor 31 includes a first output shaft 311. The first rear wheel 121 is connected to the first output shaft 311 to be driven by the first motor 31 to rotate. The second motor 32 includes a second output shaft 321. The second rear wheel 122 is connected to the second output shaft 321 to be driven by the second motor 32 to rotate. The first output shaft 311 and the second output shaft 321 jointly constitute the output shaft of the driving mechanism 30 to output power to the walking wheel assembly 10.

As shown in Fig. 3, the operating unit 40 includes a handle and a brake assembly matched with the handle. The brake assembly includes a brake disc installed on the output shaft of the driving mechanism 30, a brake caliper matched with the brake disc, and a brake cable. One end of the brake cable is connected to the handle, and the other end of the brake cable is connected to the brake caliper. When the handle is pushed to move from the neutral gear to the parking gear, the handle drives the brake cable to move so that the brake caliper clamps the brake disc under the action of the brake cable.

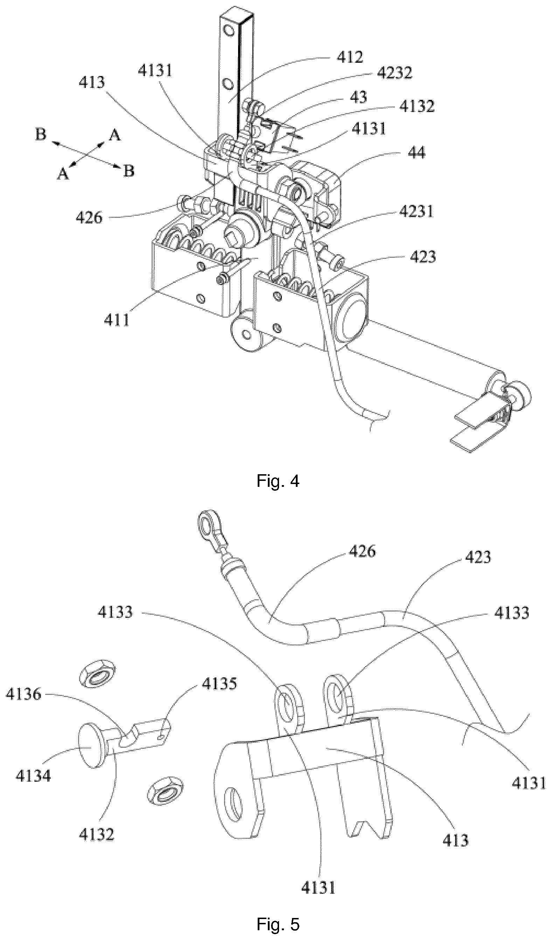

As shown in Figs. 3-4, the operating unit 40 further includes a first control element 43 and a second control element 44. The handle includes a first handle 41 and a second handle 45 disposed opposite to the first handle 41. The brake assembly includes a first brake assembly 42 matched with the first handle 41 and a second brake assembly 46 matched with the second handle 45. The first handle 41 includes a swing arm 411 that is pivotally mounted on the base portion 21 and swings in the second direction BB (as shown in Fig. 4), and a control arm 412 that is pivotally mounted on the swing arm 411 and swings along the first direction AA (as shown in Fig. 4) relative to the swing arm 411. A support arm 413 is fixedly installed at one end of the swing arm 411 close to the control arm 412, and the support arm 413 is located on the side of the control arm 412 away from the parking gear. This arrangement can effectively prevent the support arm 413 from obstructing the movement of the control arm 412 from the neutral gear to the parking gear. In this embodiment, the support arm 413 is located on the side of the control arm 412 facing the seat 212.

As shown in Figs. 4 to 5, the support arm 413 includes a pair of brackets 4131 and a cable fixing plate 4132 installed on the pair of brackets 4131 and used for fixing the brake cable. The bracket 4131 includes mounting holes 4133. The cable fixing plate 4132 is pivotally mounted on the brackets 4131 so that the cable fixing plate 4132 can rotate. One end of the cable fixing plate 4132 includes a limiting portion 4134, and the other end of the cable fixing plate 4132 includes a limiting hole 4135 and a limiting pin (not shown) that cooperates with the limiting hole 4135. The cable fixing plate 4132 passes through the mounting holes 4133, and the pair of brackets 4131 are located between the limiting portion 4134 and the limiting pin. One side of the cable fixing plate 4132 further includes a bayonet 4136 for holding the brake cable, and the bayonet 4136 is located between the limiting portion 4134 and the limiting hole 4135. The spacing between the limiting portion 4134 and the limiting pin is slightly larger than the spacing between the pair of brackets 4131, so that the cable fixing plate 4132 can slide in the connecting direction of the pair of brackets 4131, thereby making the movement of the brake cable more reliable. The first brake assembly 42 includes a first brake disc 421 installed on the first output shaft 311, a first brake caliper 422 matched with the first brake disc 421, a first brake cable 423, and a cable adjustment rod 426. The first brake cable 423 includes a brake sleeve 4231 and a steel wire 4232 located in the brake sleeve 4231. One end of the brake sleeve 4231 is installed on the first brake caliper 422, and the other end of the brake sleeve 4231 is installed on the cable adjustment rod 426. The cable adjustment rod 426 is clamped and fixed on the bayonet 4136 to fix the first brake cable 423. One end of the steel wire 4232 is installed on the brake caliper 422, and the other end of the steel wire 4232 is connected to the control arm 412. The cable adjustment rod 426 is used to adjust the tightness between the brake sleeve 4231 and the steel wire 4232, thereby adjusting the braking effect. The cable adjustment rod 426 uses a traditional structure. Since the cable adjustment rod 426 is installed on the cable fixing plate 4132, and the cable fixing plate 4132 can rotate, the cable adjustment rod 426 can freely adjust the angle according to the position of the control arm 412, thereby allowing the user to easily pull the steel wire 4232. A flange 424 is installed on the first output shaft 311, and the first brake disc 421 is installed on the flange 424. A first brake spring 425 is disposed between the first brake cable 423 and the first brake caliper 422. The first control element 43 is used to cooperate with the control arm 412 of the first handle 41 and the second handle 45 to control the driving mechanism 30 to be energized or de-energized.

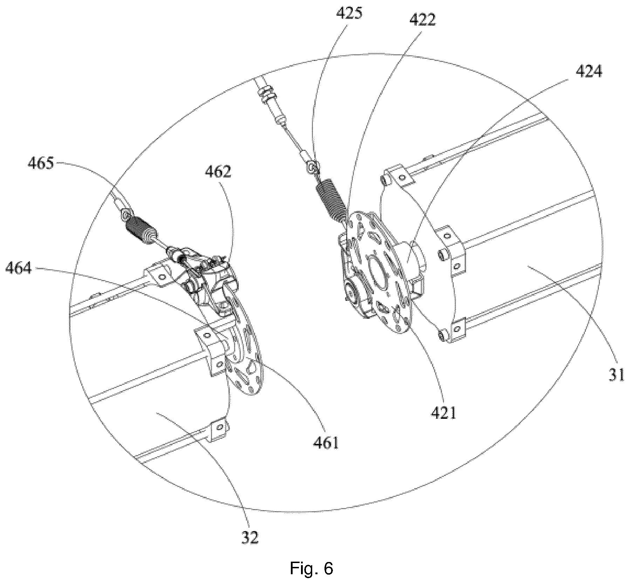

As shown in Figs. 4-6, there are, for example, two first control elements 43, which are matched with the first handle 41 and the second handle 45, respectively. In this embodiment, the first control element 43 is a switch. However, it can be understood that the first control element 43 may also have other structures. For example, the first control element 43 may be a displacement sensor that controls the driving mechanism 30 to be energized or de-energized according to the displacement of the control arm 412. The present disclosure does not limit the specific structure of the first control element 43. The second control element 44 is used to cooperate with the swing arm 411 to control the driving mechanism 30 to rotate forward or reverse or accelerate or decelerate. In this embodiment, the second control element 44 is a rotational position sensor. However, it is understandable that the second control element 44 may also have other structures, such as a pressure sensor, a distance sensor, and so on. The present disclosure does not limit the specific structure of the second control element 44. The second brake assembly 46 includes a second brake disc 461 installed on the second output shaft 321, a second brake caliper 462 matched with the second brake disc 461, and a second brake cable 463. One end of the second brake cable 463 is connected to the second handle 45, and the other end of the second brake cable 463 is connected to the second brake caliper 462. A flange 464 is installed on the second output shaft 321, and the second brake caliper 462 is installed on the flange 464. A second brake spring 465 is disposed between the second brake cable 463 and the second brake caliper 462.

As shown in Figs. 4-6, the second brake assembly 46 is controlled by the second handle 45, but it is understandable that the first brake assembly 42 and the second brake assembly 46 may be controlled by the first handle 41 at the same time, that is, one end of the second brake cable 463 is connected to the second brake caliper 462, and the other end of the second brake cable 463 is connected to the control arm 412.

As shown in Figs. 4-6, the first output shaft 311 and the second output shaft 321 both include a first keyway (not shown), and the flanges 424, 464 both include a second keyway (not shown) opposite to the first keyway, the first keyway is matched with the second keyway through a moment key to transmit the power output by the first output shaft 311 and the second output shaft 321 to the flange 424 and flange 464.

As shown in Fig. 4, when the first handle 41 is pushed in the first direction AA to move from the neutral gear to the parking gear, the control arm 412 drives the first brake cable 423 to move, so that the first brake caliper 422 clamps the first brake disc 421 under the action of the first brake cable 423 to realize parking brake. At this time, the control arm 412 cooperates with the first control element 43 to control the driving mechanism 30 to be powered off. When the first handle 41 moves from the parking gear to the neutral gear, the first control element 43 controls the driving mechanism 30 to be powered on. When the first handle 41 is pushed in the second direction BB to move from the neutral gear to the second position (that is, the forward gear), the driving mechanism 30 rotates forward to drive the ride-on electric tool 100 to move forward. When the first handle 41 is pushed in the second direction BB to move from the neutral gear to the third position (that is, the reverse gear), the driving mechanism 30 rotates reverses to drive the ride-on electric tool 100 to move backward. When the second handle 45 is pushed in the first direction AA to move from the neutral gear to the fourth position (that is, the brake gear), the second handle 45 drives the second brake cable 463 to move, so that the second brake caliper 462 clamps the second brake disc 461 under the action of the second brake cable 463 to achieve parking brake. At this time, the second handle 45 cooperates with the first control element 43 to control the driving mechanism 30 to be powered off. Due to the simple structure and high reliability of the first brake assembly 42 and the second brake assembly 46, the cumbersome operation of manual release of the traditional electromagnetic brake can be effectively avoided when the whole machine cannot be powered on. The user only needs to place the first handle 41 and the second handle 45 in the neutral gear, and then the ride-on electric tool 100 can easily pushed for maintenance.

As shown in Fig. 1, the present disclosure further discloses a ride-on lawn mower, including a walking wheel assembly 10, a main body 20 mounted on the walking wheel assembly 10, a cutting deck assembly (not shown) mounted on the main body 20 to perform lawn mowing work, a driving mechanism 30 for driving the walking wheel assembly 10 to work, and an operating unit 40.

As shown in Fig. 1, the parking brake structure of the ride-on electric tool 100 is compact, and has high reliability and low cost. When the power fails, the user can easily release the brake to push the ride-on electric tool 100 for maintenance.

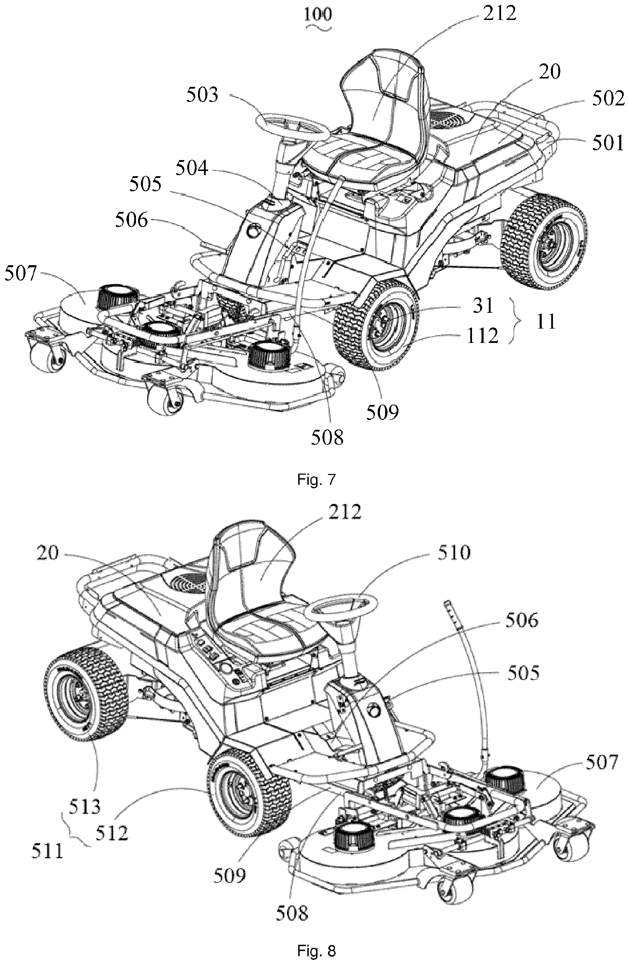

As shown in Figs. 7-8 and 12, the present disclosure discloses an electric tool 100. The electric tool 100 includes a main body 20, a drive assembly 511 installed at the bottom of the main body 20, a steering assembly 504, a brake assembly (not shown), a power supply assembly 525, a control assembly 526, and a working mechanism 507. The power supply assembly 525 supplies power to the drive assembly 511, the control assembly 526, and the working mechanism 507. In this embodiment, the working mechanism 507 is a cutting deck assembly for cutting grass, but in other embodiments, the working mechanism 507 may also be a snow shovel, a snow removal assembly, a blowing and suction assembly, and the like. The electric tool 100 may be an electric vehicle, for example, an electric lawn mower.

As shown in Figs. 7-9, the main body 20 includes a frame 501, a housing 502 mounted on the frame 501, a seat 212 mounted in the middle of the frame 501, a suspension assembly 509 mounted at the front of the frame 501, a left foot control assembly 505, and a right foot control assembly 506. The frame 501 and the housing 502 jointly form a receiving cavity 221 for receiving the power supply assembly 525 and the control assembly 526. The seat 212 is pivotally mounted on the frame 501 and located above the receiving cavity 221. When the seat 212 is rotated, the receiving cavity 221 is exposed to the outside, so that the user can place or take out the power supply assembly 525 and the control assembly 526. In this embodiment, the power supply assembly 525 is located directly below the seat 212, and the control assembly 526 is located on the side of the power supply assembly 525 away from the working mechanism 507. The suspension assembly 509 includes a cantilever 508 pivotally mounted on the front end of the frame 501 through a pivot and an elastic element (not shown) that cooperates with the cantilever 508. One end of the elastic element is fixedly mounted on the frame 501, and the other end of the elastic element is fixedly mounted on the cantilever 508. The working mechanism 507 is fixedly mounted on the cantilever 508 so that the working mechanism 507 can rotate around the pivot through the cantilever 508. The elastic element is used to assist the working mechanism 507 to lift up or to act as a buffer when the working mechanism 507 is lowered. For example, when the working mechanism 507 travels from a flat ground to a high ground, the elastic element assists the working mechanism 507 to lift. When the working mechanism 507 travels from a high ground to a flat ground, the elastic element assists the working mechanism 507 to descend to play a buffering effect.

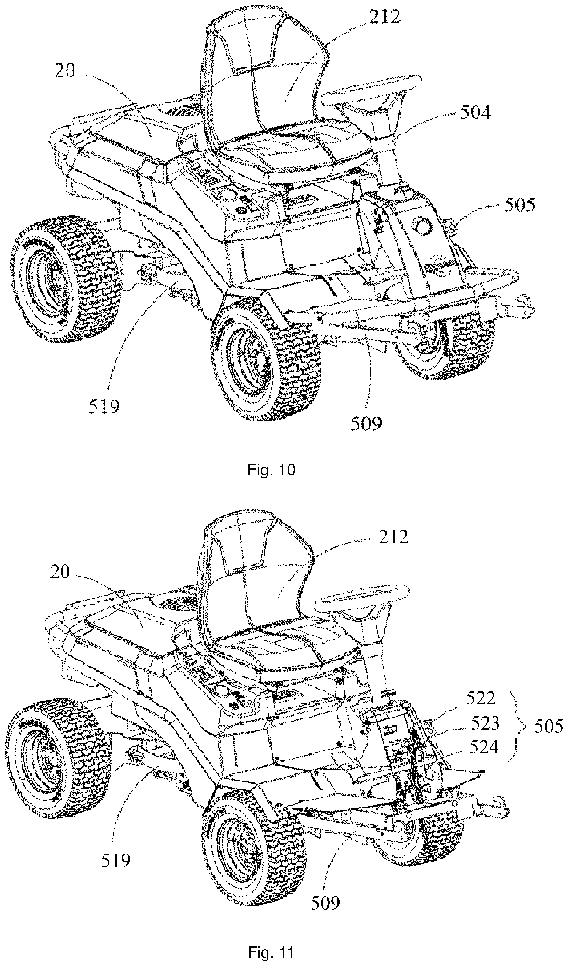

As shown in Figs. 10-11, the left foot control assembly 505 includes a left foot pedal 522, a gear 523 matched with the left foot pedal 522, and a chain 524 matched with the gear 523. The left foot pedal 522 is pivotally mounted on the frame 501 and can drive the gear 523 to rotate. One end of the chain 524 is fixedly installed on the frame 501, the other end of the chain 524 is fixedly installed on the working mechanism 507, and the middle part of the chain 524 is wound on the gear 523. When a user steps on the left foot pedal 522 and causes the left foot pedal 522 to rotate, the left foot pedal 522 drives the gear 523 to rotate. At this time, the gear 523 drives the chain 524 to move, such that the working mechanism 507 is lifted upward under the action of the chain 524. With this arrangement, the working mechanism 507 can smoothly overcome obstacles. When the user releases the left foot pedal 522, the working mechanism 507 is reset under the action of gravity. The right foot control assembly 506 includes a right foot pedal pivotally mounted on the frame 501 and a walking sensor (not shown) matched with the right foot pedal. When the user steps on the right foot pedal to rotate the right foot pedal, the walking sensor senses information such as the forward rotation, reverse rotation, and rotation amplitude of the right foot pedal, and transmits this information to the control assembly 526. The control assembly 526 controls the drive assembly 511 to move forward, move backward, or stop according to the foregoing information.

As shown in Figs. 7-8, the drive assembly 511 includes a front drive assembly 512 installed at the bottom of the front of the frame 501 and a rear drive assembly 513 installed at the bottom of the rear of the frame 501. One of the front drive assembly 512 and the rear drive assembly 513 is pivotally mounted on the main body 20 so that it can rotate around the main body 20, and the other is fixedly mounted on the main body 20. In this embodiment, the front drive assembly 512 is fixedly installed on the main body 20. The rear drive assembly 513 is pivotally mounted on the main body 20 so as to cooperate with the steering assembly 504 to realize the turning of the electric tool 100. The front drive assembly 512 includes a pair of front drive wheels 11, and the pair of front drive wheels 11 are fixedly installed on two sides of the main body 20, respectively. The front drive wheel 11 includes a front wheel hub motor 31 and a front wheel 112 mounted on the front wheel hub motor 31.

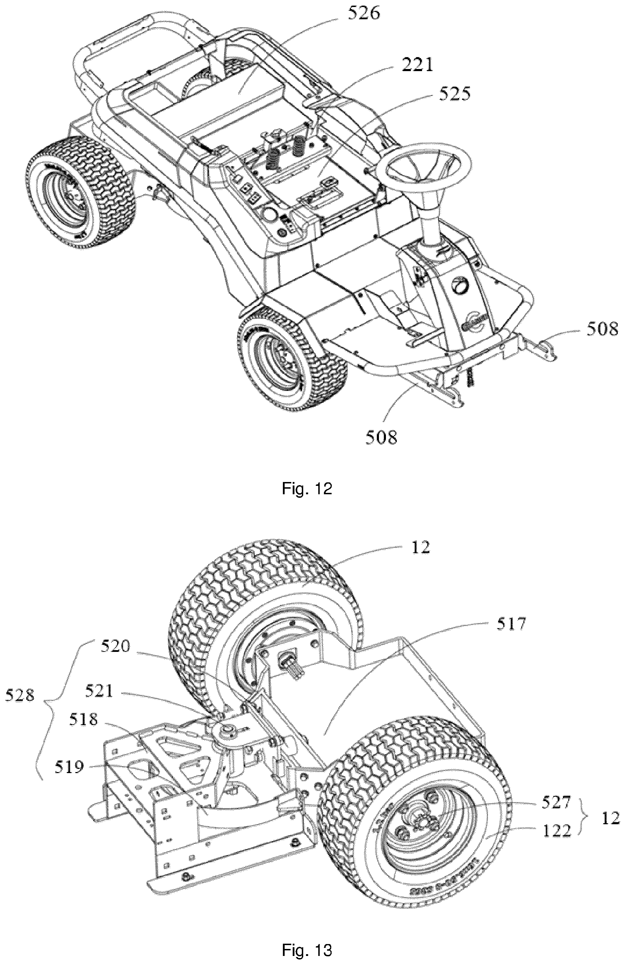

As shown in Figs. 13-14, the rear drive assembly 513 includes a rear drive axle 517, rear drive wheels 12 fixedly installed on two sides of the rear drive axle 517 respectively, and a pivot assembly 528 installed on the rear drive axle 517. The rear drive wheel 12 includes a rear wheel hub motor 527 and a rear wheel 122 mounted on the rear wheel hub motor 527. The pivot assembly 528 includes a fixing frame 518, a steering wheel 519 matched with the fixing frame 518, a first pivot 520 arranged in a horizontal direction, and a second pivot 521 arranged in a vertical direction. The fixing frame 518 is fixedly installed at the rear end of the main body 20. The steering wheel 519 is pivotally mounted on the fixing frame 518 through the second pivot 521 in the vertical direction, and at the same time is pivotally mounted on the rear drive axle 517 through the first pivot 520 in the horizontal direction. Since the rear drive axle 517 is pivotally mounted on the main body 20 through the second pivot 521, the rear drive axle 517 can rotate around the second pivot 521 in a horizontal plane, so that the electric tool 100 can turn. Since the rear drive axle 517 is pivotally mounted on the pivot assembly 528 through the first pivot 520, the rear drive axle 517 can rotate around the first pivot 520 in a vertical plane. With this arrangement, when the electric tool 100 is walking on uneven grass, the rear drive axle 517 can freely rotate around the first pivot 520 as needed, so that the front drive wheel 11 and the rear drive wheel 12 can land on the ground at the same time, avoiding the problem of a wheel hanging in the air when the traditional electric vehicle is walking on uneven roads. The main body 20 further includes a limiting member (not shown) that cooperates with the rear drive axle 517 to limit the rotation angle of the rear drive axle 517 in a vertical plane.

As shown in Figs. 8-9, the steering assembly 504 includes a driving cable 514 and a handwheel 510 that drives the driving cable 514 to rotate. Two ends of the driving cable 514 are fixedly installed on two sides of the steering wheel 519 respectively. When the handwheel 510 is rotated, the handwheel 510 drives the driving cable 514 to rotate, thereby pulling the steering wheel 519 to rotate around the second pivot 521, so that the rear drive axle 517 rotates around the second pivot 521 under the action of the steering wheel 519, thereby realizing the steering of the electric vehicle 100. Of course, it can be understood that, in other embodiments, two ends of the driving cable 514 can also be directly fixedly installed on the rear drive axle 517 and located on two sides of the second pivot 521 respectively. The driving cable 514 includes a chain, and the handwheel 510 includes a gear matched with the chain.

As shown in Fig. 12, the control assembly 526 is installed in the receiving cavity 221 and located at the rear of the main body 20. The control assembly 526 is used to control the operation of the drive assembly 511. The control assembly 526 may be a single-chip microcomputer, a central processing unit, etc., or a control circuit composed of a logic circuit, or a combination of the two. When the electric tool 100 moves forward, the control assembly 526 controls the front drive assembly 512 and the rear drive assembly 513 to drive the electric tool 100 to move forward. At this time, the front drive wheel 11 and the rear drive wheel 12 are configured such that the rotation speed of the front drive wheel 11 is not less than the rotation speed of the rear drive wheel 12. With this arrangement, the electric tool 100 can always be in a status in which the rear drive axle 517 is dragged forward by the main body 20 through the pivot assembly 528 during the forwarding process, thereby avoiding the problem that the rear drive axle 517 hits the pivot assembly 528 due to the rotation speed of the rear drive wheel 12 being greater than that of the front drive wheel 11, thereby eliminating the collision feeling that occurs during the driving of the traditional electric vehicle, and improving the stability performance of the whole machine. When the electric tool 100 is in an acceleration process, the acceleration of the front drive wheel 11 is greater than the acceleration of the rear drive wheel 12. Of course, it can also be set as follows: the acceleration time of the front drive wheel 11 is less than the acceleration time of the rear drive wheel 12; the difference between the acceleration time of the rear drive wheel 12 and the acceleration time of the front drive wheel 11 is 0.2 seconds. In addition, when the electric tool 100 is in an acceleration process, the front drive wheel 11 and the rear drive wheel 12 may also be configured such that the acceleration of the front drive wheel 11 is not less than the acceleration of the rear drive wheel 12, and the front drive wheel 11 starts to accelerate ahead of the rear drive wheel 12 by a preset time. With this arrangement, the problem of the rear drive axle 517 hitting the pivot assembly 528 due to the rotation speed of the rear drive wheel 12 being greater than that of the front drive wheel 11 can also be avoided. When the electric tool 100 turns, the pair of rear drive wheels 12 of the rear drive assembly 513 are set such that the rotational speed of the rear drive wheel 12 located inside the turning radius is less than the rotational speed of the rear drive wheel 12 located outside the turning radius. Such a setting can avoid the tire wear problem caused by the same speed of the pair of rear drive wheels when the traditional electric vehicle is turning. The difference between the rotational speed of the rear drive wheel 12 located inside the turning radius and the rotational speed of the rear drive wheel 12 located outside the turning radius is inversely proportional to the turning radius. Of course, it can be understood that, in other embodiments, the difference between the rotational speed of the rear drive wheel 12 located inside the turning radius and the rotational speed of the rear drive wheel 12 located outside the turning radius can also be set to be proportional to the rotation angle of the rear drive axle 517 in a horizontal plane.

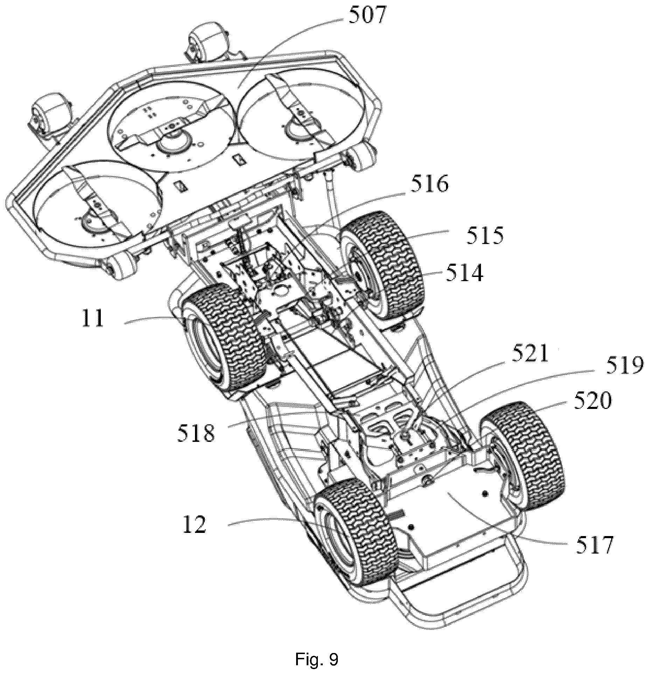

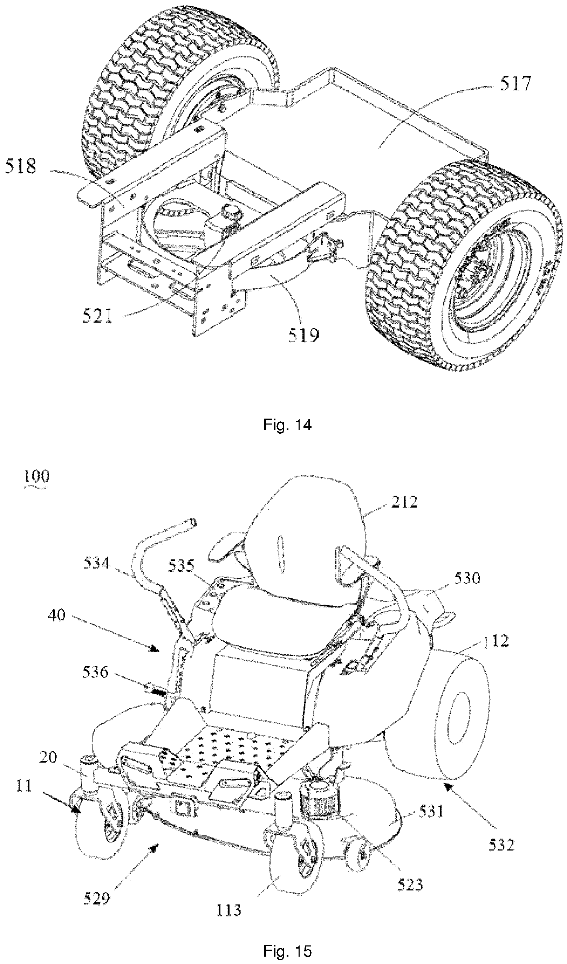

As shown in Figs. 9 and 14, when the electric tool 100 is in a deceleration process, the control assembly 526 controls the brake assembly to work, and makes the acceleration of the front drive wheel 11 greater than that of the rear drive wheel 12. That is, the decreasing speed of the rotation speed of the front drive wheel 11 is less than the decreasing speed of the rotation speed of the rear drive wheel 12. Of course, it is understandable that when the electric tool 100 is in the deceleration process, it can also be set to that the deceleration time of the front drive wheel 11 is greater than the deceleration time of the rear drive wheel 12, or the acceleration of the front drive wheel 11 is not less than the acceleration of the rear drive wheel 12, and the rear drive wheel 12 starts to decelerate ahead of the front drive wheel 11 by a preset time. In this embodiment, the control assembly 526 controls the operation of the brake assembly, but in other embodiments, the brake assembly can also be directly controlled by the user. When the user controls the brake assembly to brake, the brake assembly brakes the rear drive wheel 12, and the control assembly 526 controls the power supply assembly 525 to power off the front drive assembly 512.

As shown in Fig. 9, the electric tool 100 of the present disclosure directly drives the wheels to rotate through the wheel hub motor, so that the transmission gear box can be omitted, thereby avoiding the problem that the traditional gear box drive structure requires regular maintenance and oil replacement, saving labor costs and reducing the user's cost of use. Moreover, since the rotation speed of the front drive wheel 11 is not less than the rotation speed of the rear drive wheel 12, the front drive assembly 512 and the rear drive assembly 513 will not collide with the main body 20, thereby eliminating the collision problem caused by that the rotation speed of the rear drive wheel 12 is greater than that of the front drive wheel 11 during driving, thereby making the whole machine move more smoothly.

The present disclosure further discloses a method for controlling the electric vehicle. The method includes the following operations:

S1: detecting a movement state of the electric tool 100; when the electric tool 100 is accelerating, going to S2; otherwise, going to S3;

S2: controlling the front drive assembly 512 and the rear drive assembly 513 to accelerate, and making the rotation speed of the front drive wheel 11 be greater than the rotation speed of the rear drive wheel 12;

S3: controlling the front drive assembly 512 and the rear drive assembly 513 to decelerate, and making the rotation speed of the front drive wheel 11 be greater than the rotation speed of the rear drive wheel 12.

S2 further includes: controlling the front drive assembly 512 to start accelerating a preset time earlier than the rear drive assembly 513.

S3 further includes: controlling the front drive assembly 512 to start decelerating after a preset time delay than the rear drive assembly 513. Alternatively, the front drive assembly 512 is directly controlled to power off, and the rear drive assembly 513 is controlled to brake.

As shown in Figs. 15-16, the present disclosure further provides an electric tool 100. The electric tool 100 includes a main body 20, and a seat assembly 212, a power consumption unit 529, a manipulation unit 40, and a battery management system 537 respectively arranged on the main body 20. The battery management system 537 may also be defined as a battery system.

As shown in Fig. 15, the main body 20 is used to carry the seat assembly 212 for the operator to ride. The main body 20 extends along the running direction of the electric tool 100, and the seat assembly 212 is located on one side of the main body 20 perpendicular to the center line of the running direction. The main body 20 includes a cover assembly 530 for protecting the power consumption unit 529, the manipulation unit 40, and the battery management system 537, and the cover assembly 530 is arranged around the seat assembly 212.

As shown in Figs. 15-17, the power consumption unit 529 includes a working unit 531 detachably connected to the main body 20 and a walking assembly 532 for driving the electric tool 100 to walk, that is, the working unit 531 can be defined as a first power consumption unit, and the walking assembly 532 can be defined as a second power consumption unit. Of course, the power consumption unit 529 may further include a third power consumption unit and a fourth power consumption unit. The working unit 531 is electrically connected with the manipulation unit 40 to complete the corresponding gardening tasks under the control of the manipulation unit 40. The working unit 531 includes a working member 540 (i.e. a cutter) for realizing gardening work and a welding member 541 for carrying the working member 540, and the working member 540 is detachably connected to the main body 20 through the welding member 541. With this arrangement, on the one hand, the disassembly and replacement of the working unit 531 can be facilitated, so that the same electric tool 100 can complete a variety of gardening tasks, thereby effectively enhancing the use range of the electric tool 100. On the other hand, when the power of the electric tool 100 is too low, the working unit 531 can be directly removed to reduce the weight of the electric tool 100, so that it can use the power to return to the charging/storage position and perform charging/maintenance to ensure the convenience of the electric tool 100.

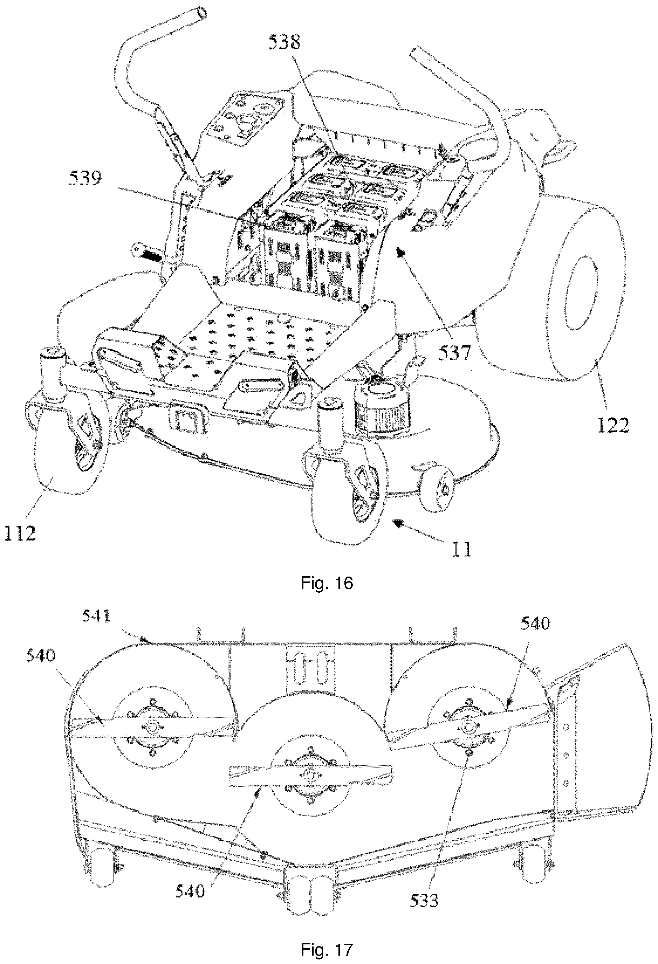

As shown in Fig. 17, multiple working members 540 may be provided at the same time to improve the working efficiency of the electric tool 100. The working unit 531 further includes a driving member 533 for driving the working member 540 to operate. The driving member 533 and the working member 540 are arranged in a one-to-one correspondence, and the driving member 533 is, for example, a driving motor. Of course, the same driving member 533 can also drive multiple working members 540.

As shown in Figs. 15-17, the working unit 531 is, for example, a mowing assembly, and the working member 540 is a mowing member for performing mowing operations. The number of working members 540 corresponds to the number of driving members 533 to ensure the working efficiency of the mowing assembly 131 when mowing the grass.

As shown in Figs. 15-17, the working unit 531 may also be a garden working assembly used to perform other gardening tasks, such as a snowplow, etc. It only needs to ensure that the working unit 531 can be adapted to the main body 20 and can be manipulated by the manipulation unit 40. That is, in the drawings and specification of the present disclosure, that the electric tool 100 is a riding lawn mower and the working unit 531 is a mowing assembly is only as an example for illustration, but they should not be limited to this.

As shown in Figs. 15-16, the walking assembly 532 is used to drive the electric tool 100 to walk, and the walking assembly 532 includes a front wheel assembly 11 and a drive wheel assembly 12. The front wheel assembly 11 includes a rotating wheel 113 rotatably connected to the front end of the main body 20 and a steering mechanism (not shown) for controlling the turning of the rotating wheel 113. The rotating wheel 113 is a universal wheel, and the rotating wheel 113 has a smooth surface to effectively avoid the influence of the rotating wheel 113 on the working ground when it is rotating.

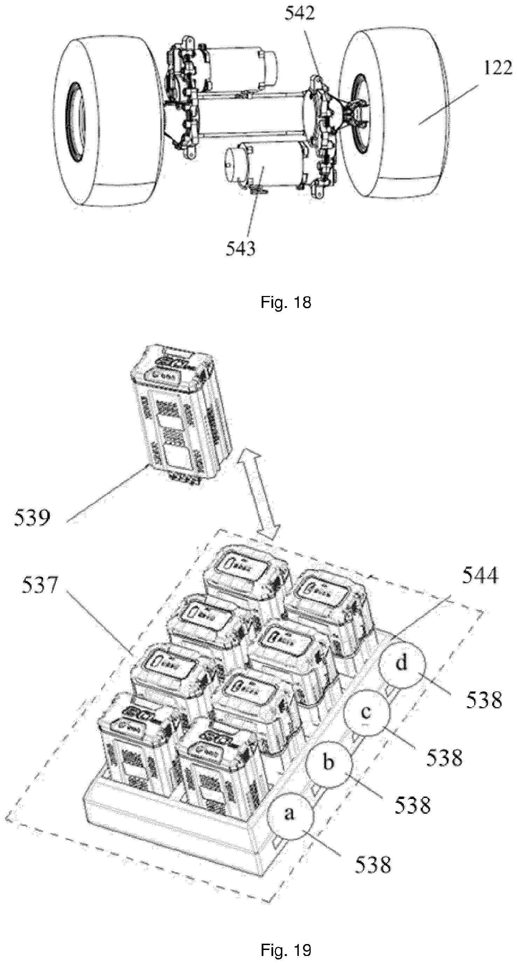

As shown in Fig. 18, the drive wheel assembly 12 is used to drive the electric tool 100 to run and achieve steering, and includes two drive wheels 122, a reduction box 542, and a drive motor 543. The two drive wheels 122 are respectively arranged at two sides of the end of the main body 20. The reduction gearbox and the drive motor jointly constitute a drive axle for controlling the operation of the drive wheels 122, and the drive axle and the drive wheels 122 are arranged correspondingly.

As shown in Fig. 15, the drive axle is installed under the main body 20, and the drive axle can control the two drive wheels 122 to perform differential motions respectively, which can effectively increase the steering angle of the drive wheels 122 and make the steering radius of the drive wheel assembly 12 infinitely approach zero, thereby further improving the practicability and usability of the electric tool 100.

As shown in Fig. 15, the manipulation unit 40 is arranged on the main body 20, and is used to control the operation of the power consumption unit 529 in the electric tool 100. In the present disclosure, the manipulation unit 40 includes an electrical manipulation unit 534, a control panel 535 electrically connected to the electrical manipulation unit 534, and a height adjustment unit 536 for adjusting the operating height of the electric tool 100.

As shown in Fig. 15, the electrical manipulation unit 534 is used to collect the operating signals transmitted by the power consumption unit 529, the battery management system 537, and the control panel 535, judge the operating signals, and issue corresponding instructions to control the power consumption unit 529/battery management system 537/control panel 535 to execute corresponding actions or perform corresponding displays.

As shown in Fig. 15, the control panel 535 is used to receive instructions from the operator, and send corresponding operating signals to the electrical manipulation unit 534 for processing, so as to further complete the corresponding garden work or function switching according to the operator's requirements to achieve the purpose of improving the convenience of use of the electric tool 100.

As shown in Fig. 15, the height adjustment unit 536 includes an adjustment structure (not shown) under the main body 20 for adjusting the relative height between the main body 20 and the working ground, and an adjustment member (not labeled) for controlling the adjustment structure. The height adjustment unit 536 is located on the side of the seat assembly 212 to facilitate the use of the operator and improve the convenience of use of the electric tool 100. Of course, the height adjustment unit 536 may also be located at the foot pedal position at the front end of the main body 20. At this time, the adjustment structure can be controlled by stepping on the pedal adjustment member, which further improves the convenience of use of the electric tool 100.

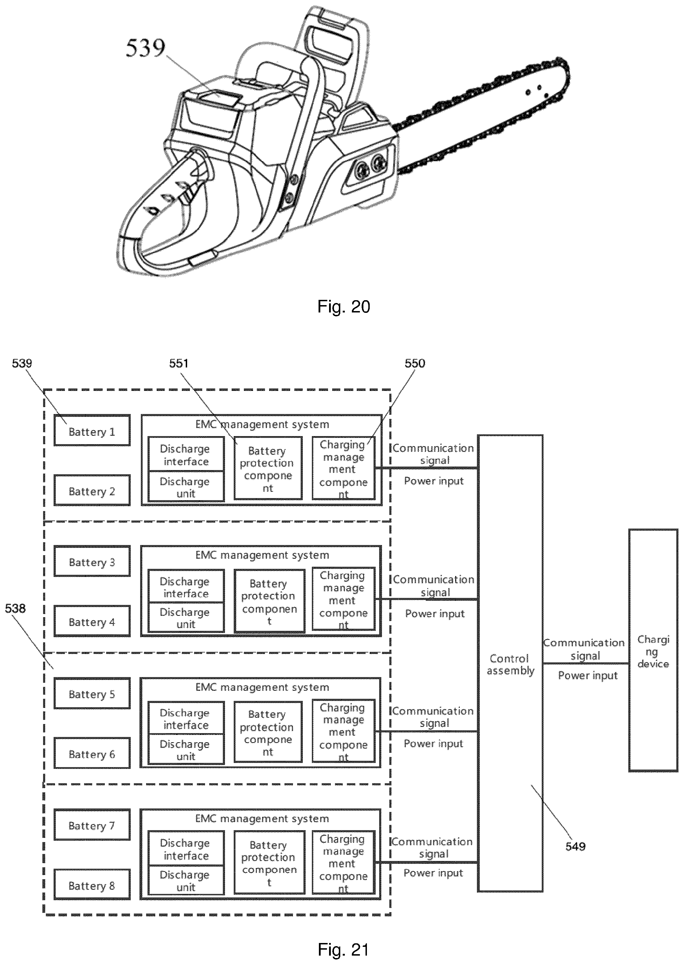

As shown in Figs. 19 and 21, the battery management system 537 is installed on the main body 20 to provide power to the electric tool 100. In the present disclosure, the battery management system 537 includes a battery accommodating part 544 and a control assembly 549.

As shown in Figs. 19-20, the battery accommodating part 544 is fixedly arranged on the main body 20 for accommodating a plurality of battery packs 539, and the plurality of battery packs 539 are detachably connected to the battery accommodating part 544, such that the plurality of battery packs 539 are detachably connected to the electric tool 100 to facilitate the replacement of the plurality of battery packs 539, and each of the plurality of battery packs 539 can provide power for at least one hand-held tool.

As shown in Fig. 19, the plurality of battery packs 539 are divided into different power supply units 538 to supply power to the working unit 531 and the walking assembly 532 respectively. For example, Fig. 19 shows four power supply units 538, such as a first power supply unit, a second power supply unit, a third power supply unit, and a fourth power supply unit from top to bottom. The first power supply unit, for example, supplies power for the first power consumption unit, the second power supply unit, for example, supplies power for the second power consumption unit, the third power supply unit, for example, supplies power for the third power consumption unit, and the fourth power supply unit, for example, supplies power for the fourth power consumption unit. That is, different power supply units supply power for different power consumption units. The power supply units 538 include at least two battery packs 539 in parallel. The rated voltages of the battery packs 539 located in the same power supply unit 538 are equal. Such a setting can facilitate the power supply unit 538 to achieve stable voltage output. The number of battery packs 539 in each power supply unit 538 is equal, so that each power supply unit 538 can supply power to the same power consumption unit 529 under the control of the control assembly 549 and the manipulation unit 40, so as to ensure the endurance of the power consumption unit 529. Each group of power supply units 538 has two battery packs 539 arranged side by side, and multiple groups of power supply units 538 are connected as a whole through the integrated battery receiving part 544, so that the multiple battery packs 539 are arranged in a matrix, and are arranged in a matrix. The battery pack 539 is connected and installed in the main body 20 and is located under the seat assembly 212. Of course, the battery management system 537 arranged in a matrix can also be located at other positions of the main body 20, such as the rear of the main body 20, etc. That is, the specific location of the battery management system 537 can be selected according to the actual situation, which is not limited here.

As shown in Fig. 19, different power supply units 538 are arranged separately, that is, the battery accommodating part 544 is arranged separately. In this way, the power supply units 538 in the battery management system 537 or the battery packs 539 in each power supply unit 538 can be separated from each other. The power supply units 538 or the battery pack 539 can be respectively arranged at different positions of the main body 20. On the one hand, the distributed installation of the power supply units 538/battery packs 539 in the battery management system 537 is realized; on the other hand, it is convenient for the battery management system 537 to supply power to the power consumption unit 529.

As shown in Fig. 19, when the power supply units 538 are installed in a distributed manner, multiple groups of power supply units 538 need to be evenly arranged on the main body 20, and the center of all battery packs 539 is located between the rotation axis of the drive wheel assembly 12 and the rotation axis of the front wheel assembly 11. Therefore, the weight at the upper position of the main body 20 is evenly distributed to ensure the smooth operation of the electric tool 100, thereby preventing the shortening of the service life of the electric tool 100 caused by the excessive partial load of the main body 20 caused by uneven weight distribution.

As shown in Fig. 19, the number of battery packs 539 in each power supply unit 538 may be different. In this case, multiple power supply units 538 may simultaneously/respectively supply electric energy to power consumption units 529 with different rated powers. Specifically, when the number of battery packs 539 in each power supply unit 538 is different, for example, when there is only one battery pack 539 in some power supply units 538, then the power supply units 538 can supply power to one working member 540 in the working unit 531. It can be seen from Fig. 17 that there are three working members 540. In this embodiment, at least three power supply units 538 supply power to the three working members 540 respectively. In this case, the battery management system 537 at least includes another power supply unit 538 supplying power for the walking assembly 13, and the power supply unit 538 may have two battery packs 539.

As shown in Figs. 19-20, the power supply unit 538 includes a current adjustment member (not shown). The current adjustment member is electrically connected to the control assembly 549, and can adjust the output current of the power supply unit 538 under the control of the control assembly 549, so that the power supply units 538 with different numbers of battery packs 539 have the same power output, so that different power supply units 538 can be applied to the same power consumption unit 529 to ensure normal operation of the power consumption unit 529.

As shown in Figs. 19-20, the limitation on the number of battery packs 539 in the power supply unit 538 is only exemplary. In actual use, the number and arrangement of the battery packs 539 in each power supply unit 538 can be made according to actual needs, and should not be limited by this.

As shown in Figs. 19-20, each battery pack 539 in the present disclosure can be separated from the electric tool 100 to supply power to a power consumption assembly that is different from the power consumption unit 529. In the present disclosure, the power consumption assembly is a hand-held garden tool driven by the battery packs 539, and when the battery packs 539 in one group of power supply units 538 are disassembled for use, the other group or groups of power supply units 538 can still supply power to the power consumption units 529 electrically connected to the battery packs 539, to ensure the normal use of the electric tool 100. At the same time, the power supply battery pack applied to the hand-held garden tool (as shown in Fig. 20) can also be used in the power supply unit 538 of the present disclosure after being disassembled, it only needs to ensure that the rated voltage of the power supply battery pack is equal to the rated voltage of the battery pack 539, and that the discharge interface of the power supply battery pack and the connection structure of the battery pack match each other. Such an arrangement effectively improves the practicability of the electric tool 100 and reduces the use cost of the electric tool 100.

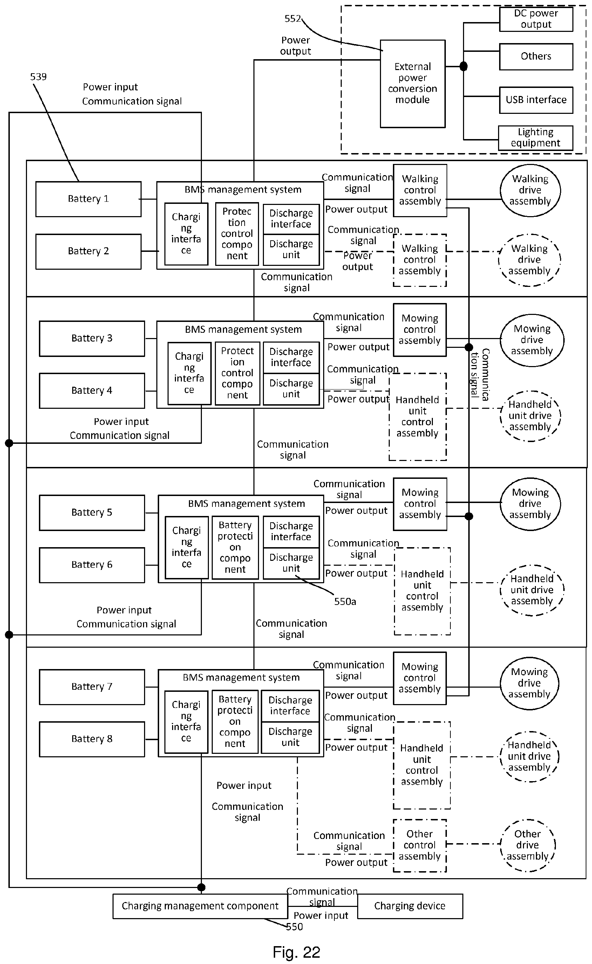

As shown in Figs. 21-22, the control assembly 549 is used to control each power supply unit 538 to individually complete the energy supply to the power consumption unit 529. The battery management system 537 also includes a charging management component 550 and a discharging management component 550a that are electrically connected to the control assembly 549 respectively.

As shown in Figs. 21-22, the control assembly 549 is electrically connected to the manipulation unit 40. On the one hand, the control assembly 549 is used to receive the communication signal transmitted by the manipulation unit 40 or the charging device and the discharging device and control the work of the charging management component 550 or discharging management component 550a according to the communication signal; on the other hand, the control assembly 549 can also be used to receive the collection signal transmitted by the charging management component 550 and the discharging management component 550a, and send a control signal according to the collection signal to control the charging management component 550 to charge or the discharging management component 550a to discharge.

As shown in Figs. 21-22, the charging management component 550 includes an information collection module and a charging interface respectively corresponding to each power supply unit 538. The information collection module is used to collect power information, current information, voltage information, cell temperature information, and power information of each power supply unit 538, and transmit the information to the control assembly 549 for processing. The charging interface is used to realize the electrical connection between the power supply unit 538 and the charging device to finally realize the charging of the power supply unit 538, and each charging interface has a shut-off member (not shown) electrically connected to the control assembly 549.

As shown in Figs. 21-22, the shut-off member can receive the control instruction sent by the control assembly 549 after the control assembly 549 receives the collected information collected by the information collection module, and act according to the control instruction of the control assembly 549. If the information collection module transmits the collected information such as voltage, current, and cell temperature to the control assembly 549, the control assembly 549 determines whether the relevant data exceeds the set control threshold. If the relevant data exceeds the control threshold, the control assembly 549 will send out the corresponding signal to control the shut-off member to disconnect.

**As** shown in Figs. 21-22, the control assembly 549 can also be used to preset the charging threshold. When the control assembly 549 detects that the power information of any power supply unit 538/battery pack 539 collected by the information collection module is lower than the charging threshold and the power supply unit 538/battery pack 539 is not connected to the charging device, the control assembly 549 sends a warning signal that the battery is too low to the manipulation unit 40, and displays it through the control panel 535 to prompt the operator to charge. Further, when the control assembly 549 receives the communication signal connected to the charging device, the control assembly 549 completes the charging of each power supply unit 538 through the charging interface in the order of the power of the power supply unit 538 from low to high, and only when the power supply unit 538 is in the charging state, the corresponding shutdown device is in the on state to prevent abnormal discharge of the power supply unit 538 to be charged, thereby further improving the charging efficiency of the battery management system 537.

As shown in Figs. 21-22, the electric tool 100 includes a charging interface, and the charging device can charge all or part of the battery packs 539 through the charging interface. In other embodiments of the present disclosure, the battery packs 539 can also be detached from the electric tool 100, and a charger can be used for independent charging.

As shown in Figs. 21-22, in the process of independently charging a battery pack 539, the charging sequence of the battery pack 539 is not particularly limited. When multiple battery packs 539 are installed on the electric tool 100 for charging, the control assembly 549 detects the power of the battery packs 539, charging can be carried out in the order of electric quantity from high to low, or from low to high, or from the battery pack 539 with the middle electric quantity, or the charging sequence can be determined according to the frequency of use of different power supply units 538.

As shown in Figs. 21-22, the discharging management component 550a includes a battery detection unit and a discharge interface corresponding to each power supply unit 538. The battery detection unit is used to detect the number and output power of the battery pack 539 in the corresponding power supply unit 538 and information such as the voltage, current and cell temperature of each battery pack 539, and transmit the detected number and output power and information to the control assembly 549 for processing, so as to perform the switching of the power supply unit 538 in the working status according to the number and/or the output power of battery packs 539 in each power supply unit 538. Further, the battery detection unit is also set to balance the voltage of each battery pack 539 in the same power supply unit 538, and the battery detection unit can also be used to receive a control signal from the control assembly 549 to turn off and switch the power supply unit 538 in the power output state.

As shown in Figs. 21-22, the discharge interface is used to connect the power consumption unit 529 and the manipulation unit 40 to provide power to them and ensure their normal operation. Further, the discharging management component 550a further includes an external power conversion module 552 for realizing electric energy output. The external power conversion module 552 includes one or more of a USB interface, a lighting device interface, or a DC output device interface. With this arrangement, the battery management system 537 and the electric tool 100 of the present disclosure can provide power for small power consumption equipment such as lighting equipment, thereby effectively improving the scope of application.

As shown in Figs. 21-22, the control assembly 549 can also be used to preset the discharge threshold. In the present disclosure, the discharge threshold includes a number threshold of the battery pack 539 in the power supply unit 538 and a current threshold/voltage threshold/temperature threshold/power threshold of each power supply unit 538/battery pack 539. When the information collected by the discharging management component 550a is the number of battery packs 539 in the power supply unit 538, the control assembly 549 compares the number of battery packs 539 in each power supply unit 538 with the number threshold. When the number of battery packs 539 in the power supply unit 538 in the working status is less than the preset number threshold, the control assembly 549 controls the power supply unit 538 to stop the output of power, and matches the power supply unit 538 in the idle state to the power consumption unit 529 that needs power, to ensure the continuity of the use of the power consumption unit 529. It should be noted that in this embodiment, only the information collected by the discharging management component 550a is taken as an example for quantitative information. When the information collected by the discharging management component 550a is other information, such as current information, voltage information, temperature information, or power information, the control assembly 549 and the discharging management component 550a can still switch the power supply unit 538 for energy output according to the above-mentioned process.

As shown in Figs. 21-22, the control assembly 549 further includes a battery protection component 551 electrically connected to the control assembly 549 and the power supply unit 538. The battery protection component 551 includes a battery pack overcurrent and overvoltage protection member, a battery pack high and low temperature protection member, a battery pack short-circuit protection member, and a battery pack low-voltage protection member, to constantly monitor the battery pack 539 in the power supply unit 538. When the battery pack 539 is abnormal in use, the battery protection component 551 can turn off the power supply unit 538 in time, stop the power supply unit 538 from transmitting electric energy, and send a prompt message to the control panel 535 through the control assembly 549.

As shown in Figs. 18-19 and Fig. 21, the battery management system 537 has four groups of power supply units 538, and each group of power supply units 538 has two battery packs 539. The four groups of power supply units 538 are connected in the same battery accommodating part 544, and the battery accommodating part 544 can be installed under the seat assembly 212.

As shown in Fig. 19, the power supply units 538 are used to supply power to the drive wheel assembly 12 in the walking assembly 532 and the external power conversion module 552 to ensure that the electric tool 100 is driven by the walking assembly 532 to walk in the work area.

As shown in Fig. 19, the power supply units 538 are used to supply power to the working unit 531, and the battery packs in each group of power supply units 538 can be used to supply power to the power supply units 538 individually. When one or more battery packs 539 in any group of power supply units 538 are taken out, the working unit 531 can still work normally.

As shown in Fig. 16, the electric tool 100 in the present disclosure is only exemplary. The battery management system 537 can also be used as a power source for golf carts, ATVs, electric bicycles, electric motorcycles, unmanned lawn vehicles, and other electric tools driven by electricity.

The terms "manipulation unit", "control assembly", "power consumption unit", "battery management system" and the like in the present disclosure may include or relate to at least one of hardware and software.

As shown in Fig. 16, the electric tool 100 of the present disclosure is powered by a battery management system 537, and is provided with multiple groups of power supply units 538 and a control assembly 549 for controlling the power supply units 538, so that the control assembly 549 can control the power supply units 538 to supply power for different power consumption unit 529 independently, thereby avoiding the abnormal use of the electric tool 100 and the battery management system 537 caused by the damage of the battery pack 539 in a single power supply unit 538, making the lawn mower using the battery management system 537 easy to use. Therefore, the electric tool 100 has a high use efficiency and a good user experience.

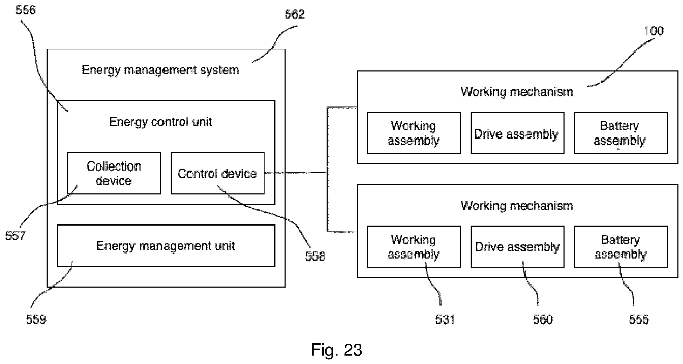

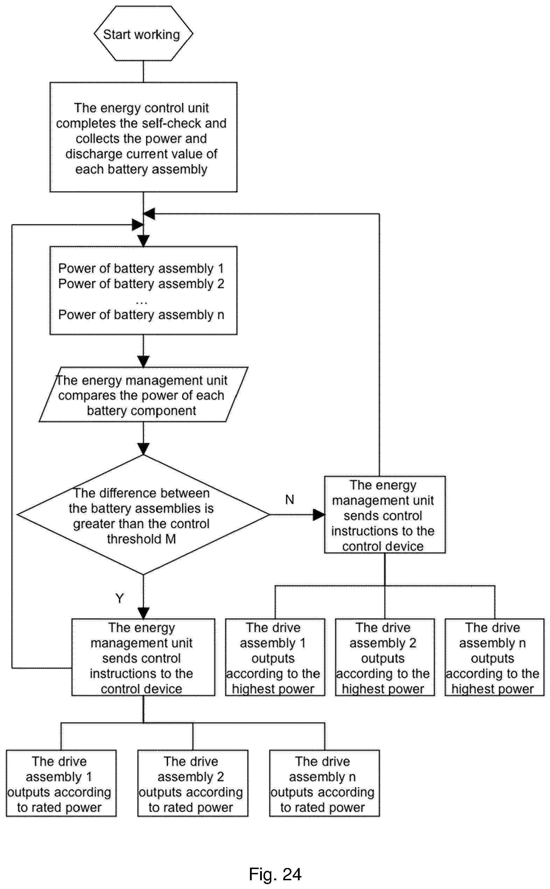

As shown in Figs. 23-24, the present disclosure provides an energy management system 562 for adjusting the usage status of the electric tool 100.

As shown in Fig. 23, at least two groups of electric tools 100 are connected to the energy management system 562, and each group of electric tools 100 includes a working unit 531 for performing a corresponding work task, a drive assembly 560 for driving the working unit 531 to work, and a battery assembly 555 for providing power to the drive assembly 560. The working unit 531 and the drive assembly 560 can also be defined as power consumption units, that is, the energy management system 562 can be electrically connected to the working unit 531 and the drive assembly 560.

As shown in Fig. 23, the energy management system 562 includes an energy control unit 556 and an energy management unit 559. The energy control unit 556 is electrically connected to the electric tool 100 and the energy management unit 559, respectively, and includes a collection device 557 and a control device 558 for receiving control instructions issued by the energy management unit 559 and controlling the state adjustment of the electric tool 100. Further, the control device 558 is electrically connected to the drive assembly 560 to control the output speed of the drive assembly 560.

As shown in Fig. 23, the collection device 557 is electrically connected to the drive assembly 560, the battery assembly 555, and the energy management unit 559 in each electric tool 100 respectively, to collect the usage status information of the electric tool 100, that is, collect the usage status information of the working unit 531, the drive assembly 560, and the battery assembly 555.

As shown in Fig. 23, the usage status information collected by the collection device 557 includes at least voltage information and current information of the battery assembly 555, and rotational speed information and output power information of the drive assembly 560 in each electric tool 100. It should be noted that the types of usage status information exemplified in the present disclosure are only exemplary, and are not limited thereto.

As shown in Fig. 23, the collection device 557 can simultaneously collect the power information and current information of the battery assembly 555, and information of the drive assembly 560, or different collection devices 557 can separately collect the power information of the battery assembly 555 and the rotational speed information of the drive assembly 560.

As shown in Fig. 23, the control device 558 is electrically connected to the energy management unit 559 and the drive assembly 560 and/or the battery assembly 555. Specifically, the control device 558 is used to receive the control instructions issued by the energy management unit 559, adjust the rotation speed of the drive assembly 560 and/or the output of the battery assembly 555 according to the control instructions, and further adjust the usage status of the electric tool 100 to ensure that the energy of each electric tool 100 is in a balanced state.

As shown in Figs. 23-24, the energy management unit 559 is configured to collect the usage status information transmitted by each energy control unit 556, and calculate the status difference between different power consumption units (for example, working assemblies 531) based on the usage status information. In the present disclosure, the status difference is the absolute value of the difference between the usage status information in different power consumption units, and the types of usage status information for calculating the status difference are the same to ensure the accuracy of the calculation result. The usage status information selected by the present disclosure for calculating the status difference is the remaining power information of the battery assembly 555 in different electric tools 100, that is, at this time, the status difference is the power difference C. This setting can facilitate the energy management unit 559 to evaluate the output power and/or power consumption of the electric tool 100 to further facilitate the evaluation of the usage status of the electric tool 100.

As shown in Figs. 23-24, the energy management unit 559 is also configured to set a control threshold M. Specifically, when the energy management unit 559 detects that any collected status difference exceeds the corresponding control threshold M, the energy management unit 559 issues control instructions to the energy control unit 556, and adjusts the usage status of the electric tool 100 through the energy control unit 556.

As shown in Figs. 23-24, the energy management unit 559 is configured to summarize the usage status information from each energy control unit 556 and calculate and obtain the status difference. Specifically, the energy management unit 559 can be used to set a control threshold M, input control instructions and send control instructions to the energy control unit 556. The interactive device can also be used to display the usage status information of each electric tool 100, so as to facilitate the operator to control and manage the electric tool 100 in real time according to the usage status information.

As shown in Figs. 23-24, the setting of the control threshold M in the present disclosure can be either the fixed information preset by the energy management system 562 at the factory, or the set adjustable information made by the operator according to actual needs during use.

As shown in Figs. 23-24, the control instruction is control information used to adjust/control the working status of the electric tool 100. The control instruction may be an instruction for adjusting the working status of the battery assembly 555, such as a current control instruction or a voltage control instruction, or may be an instruction for adjusting the working status of the drive assembly 560, such as a speed control instruction. The control instruction is a power control command used to control the output power of the drive assembly 560.

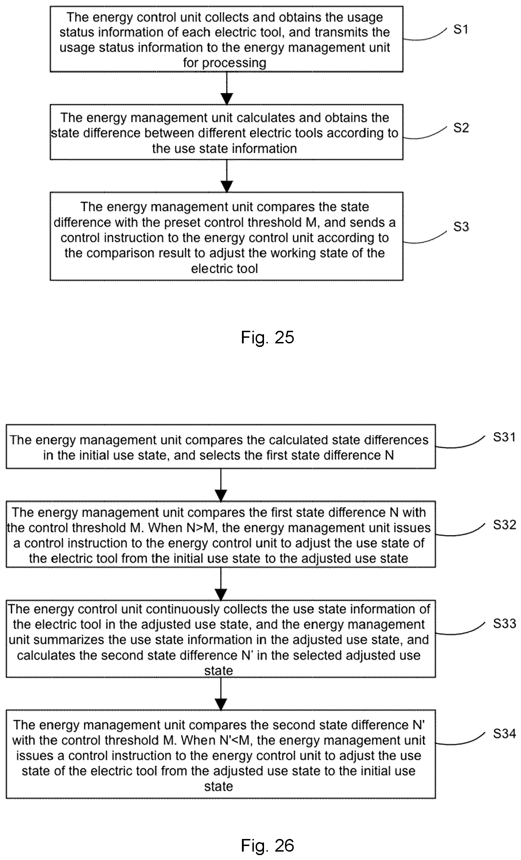

As shown in Fig. 25, the present disclosure further provides an energy management method that uses the energy management system 562 to perform energy management and control on the electric tool 100. The energy management method includes the following operations:

S1: the energy control unit 556 collects and obtains the usage status information of each electric tool 100, and transmits the usage status information to the energy management unit 559 for processing;

S2: the energy management unit 559 calculates and obtains the status difference between different electric tools 100 according to the usage status information;

S3: the energy management unit 559 compares the status difference with the preset control threshold M, and sends a control instruction to the energy control unit 556 according to the comparison result to adjust the working status of the electric tool 100.

The operations S1 to S3 will be described in detail below in conjunction with the specific structure of the energy management system 562.

S1 may include:
S11: the energy control unit 556 collects and obtains the usage status information of each electric tool 100 connected to the energy control unit 556 within a set time or in real time;
S12: the energy management unit 559 receives the usage status information of each electric tool 100, and performs summary statistics on the usage status information of each electric tool 100.

In S11, the set time means that the usage status information of each electric tool 100 is collected and obtained at the same time point and the same time interval through the collection device 557. Such a setting can ensure the accuracy when using the energy management system 562 to evaluate the energy of the electric tool 100, and avoid the difference in energy consumption of the electric tool 100 due to different collection times, which further affects the energy evaluation result of the energy management system 562.

In S12, the energy management unit 559 may classify the usage status information according to the category of the usage status information collected by the collection device 557, so as to avoid confusing the summary statistics of the usage status information that will affect subsequent calculations.

S2 includes that the energy management unit 559 calculates and obtains the status difference between different electric tools 100 according to the usage status information. In the present disclosure, each usage status information corresponds to at least one status difference, that is, the type of the status difference is consistent with the type of the collected usage status information, the status difference is the power difference C, and the usage status information is the remaining power information of the battery assembly 555.

As shown in Fig. 26, S3 includes:
S31: the energy management unit 559 compares the calculated status differences in the initial usage status, and selects the first status difference N;
S32: the energy management unit 559 compares the first status difference N with the control threshold M. When N>M, the energy management unit 559 issues a control instruction to the energy control unit 556 to adjust the usage status of the electric tool 100 from the initial usage status to the adjusted usage status;
S33: the energy control unit 556 continuously collects the usage status information of the electric tool 100 in the adjusted usage status, and the energy management unit 559 summarizes the usage status information in the adjusted usage status, and calculates the second status difference N' in the selected adjusted usage status;
S34: the energy management unit 559 compares the second status difference N' with the control threshold M. When N'<M, the energy management unit 559 issues a control instruction to the energy control unit 556 to adjust the usage status of the electric tool 100 from the adjusted usage status to the initial usage status;

As shown in Fig. 26, the initial usage status is the rated usage status of the electric tool 100, that is, when the electric tool 100 is in the initial usage status, the battery assembly 555 is fully charged and the drive assembly 560 operates according to the rated power, and when the electric tool 100 is in the adjusted usage status, the power of the battery assembly 555 in the electric tool 100 is insufficient/lower than the average power level, and the drive assembly 560 operates at a power lower than the rated power.

As shown in Fig. 26, in S31, the first status difference N is a status difference with the largest value among the status differences in the initial usage status.

As shown in Fig. 26, in S32, the energy management unit 559 compares the first status difference N with the control threshold M. When N>M, the energy management unit 559 identifies two electric tools 100 used to calculate the first status difference N, marks the electric tool 100 with low usage status information value (such as low remaining power/small output current) among the two electric tools 100, further adjusts the usage status of the marked electric tool 100 through the energy control unit 556, so as to reduce the rotation speed of the drive assembly 560 or the output voltage of the battery assembly 555 without affecting the use effect of the working unit 531, and reduces the power of the drive assembly 560, so that the usage status of the electric tool 100 changes from the initial usage status to the adjusted usage status to further balance the energy between the marked electric tool 100 and the other electric tool 100.

As shown in Fig. 26, in S33, the second status difference N' is a status difference with the largest value among the status differences in the adjusted usage status.

As shown in Fig. 26, the energy management unit 559 compares the second status difference N' with the control threshold M. When N'<M, the energy management unit 559 recognizes the electric tool 100 that is operating in the adjusted usage status, and issues a control instruction through the energy control unit 556 to control all drive assemblies 560 connected to the energy management system 562 to have the same rotation speed or the battery assemblies 555 to have the same output power. The electric tool 100 is restored from the adjusted usage status to the initial usage status or works according to the maximum power.

As shown in Fig. 26, the second status difference N' is a status difference with the largest value among the status differences in the adjusted usage status.

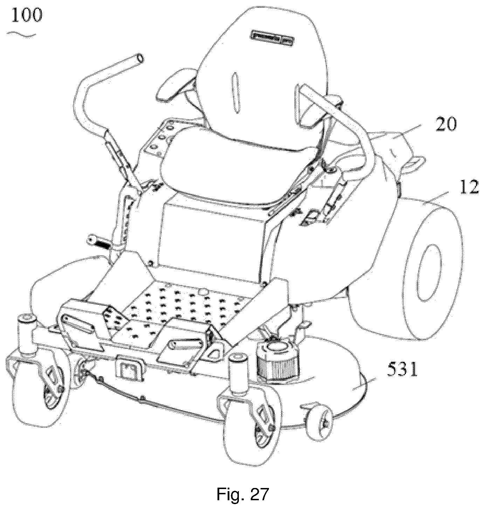

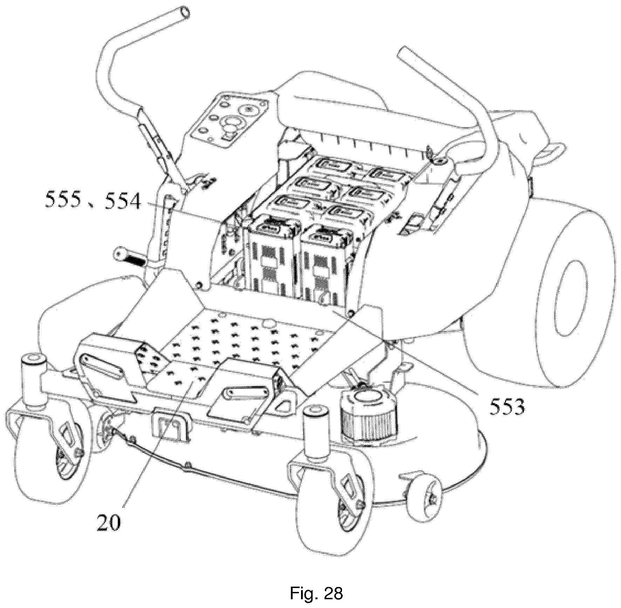

As shown in Figs. 27-28, the present disclosure further provides an electric tool 100. The electric tool 100 includes a main body 20, a working system 561 and a power system (not labeled) disposed on the main body 20, and an energy management system 562 for adjusting the working status of the working system 561.

As shown in Fig. 27, the main body 20 is used to carry the working system 561 and the power system. The working system 561 is detachably connected to the main body 20 and electrically connected to the energy management system 562. The working system 561 includes a welding member 541 detachably connected to the main body 20 and an electric tool 100 arranged on the welding member 541 for realizing garden work.

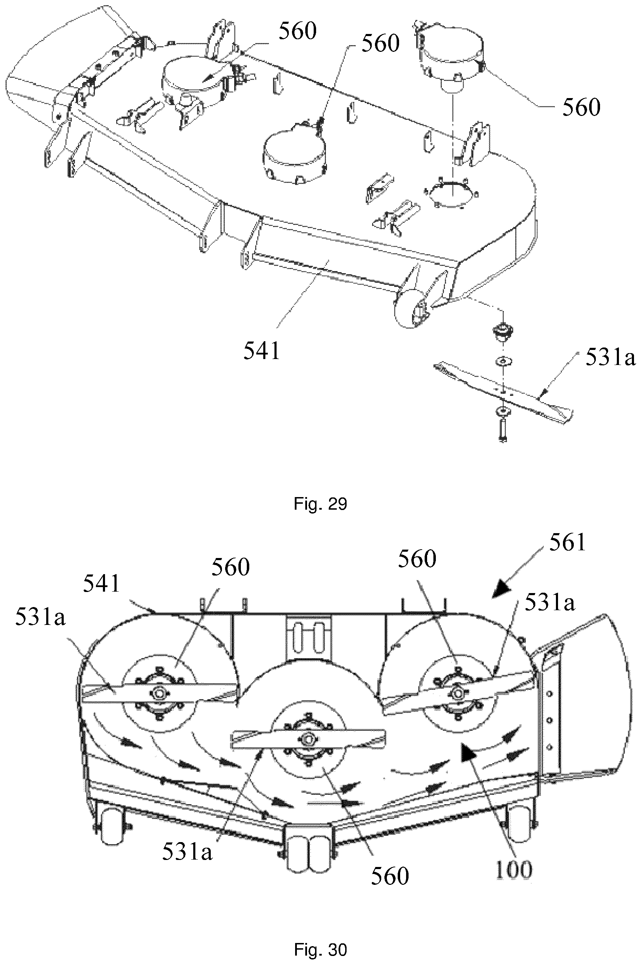

As shown in Figs. 29-31, the electric tool 100 is a lawn mower or a mowing work device. The working unit 531 is a cutting knife for performing mowing tasks, and the two ends of the cutting knife 531a include a wind blade 563 tilted upward in the vertical direction and a knife tip 565 located below the wind blade 563 for breaking the grass. The drive assembly 560 is a drive motor for driving the working unit 531 to operate, and the driving motor 560 and the cutting knife 531a are arranged in a one-to-one correspondence to individually drive each cutting knife 531a to operate. In this embodiment, three groups of electric tools 100 are provided at the same time, and three cutting knives 531a are drivingly connected to the welding member 541 through the three drive motors 560 arranged in a staggered position on the welding member 541, so as to increase the mowing area of the mowing electric tool 100.

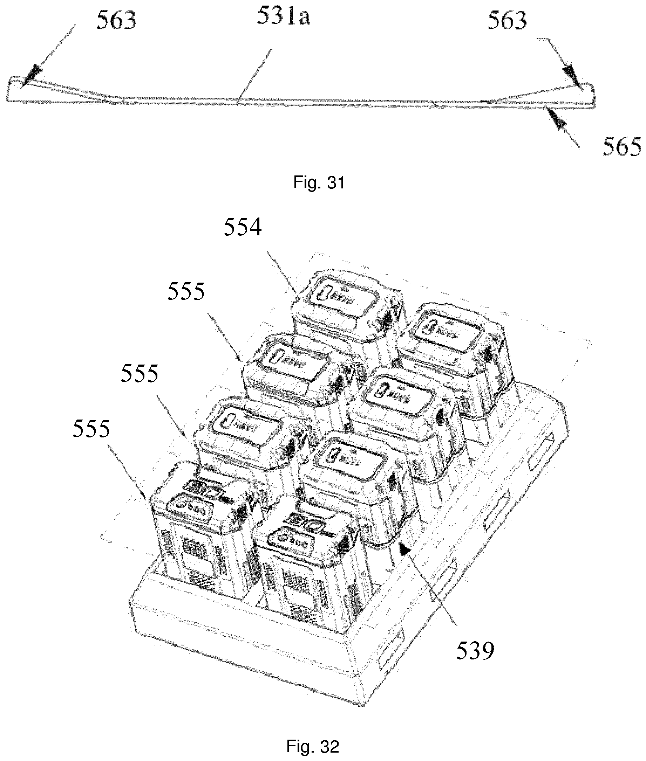

As shown in Fig. 32, the battery assemblies 555 and the drive motors 560 are arranged correspondingly to supply power to each drive motor 560, and each battery assembly 555 includes one or more battery packs 539. In this embodiment, the battery assemblies 555 for supplying power to the drive motors 560 are arranged in a matrix as a whole to facilitate the installation of the battery assemblies 555.

As shown in Fig. 32, the power system includes a walking assembly 12 for driving the electric tool 100 to walk and a battery unit 554 for powering the walking assembly. In the present disclosure, the electric tool 100 may be a ride-on garden tool, the walking assembly 12 includes a front wheel assembly (not labeled) and a drive wheel assembly (not labeled) for driving the electric tool 100 to walk, the battery unit 554 is electrically connected to the drive wheel assembly to provide power to the drive wheel assembly.

As shown in Fig. 32, the battery unit 554 includes one or more battery packs 539. In this embodiment, both the battery unit 554 and the battery assembly 555 are connected and installed in the battery mounting cavity 553 disposed on the main body 20, so that all the battery packs 539 in the electric tool 100 are arranged in a regular manner to reduce the difficulty of designing and manufacturing the electric tool 100.

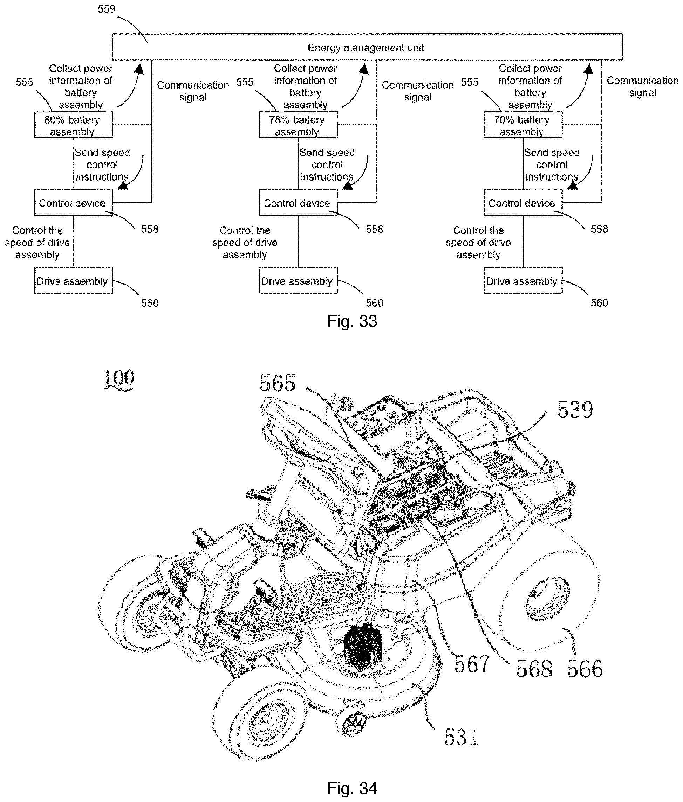

As shown in Fig. 33, the energy management system 562 used to adjust the working status of the working system 561 is the aforementioned energy management system. The energy management system 562 also has an energy control unit 556 that is electrically connected to the electric tool 100 for collecting the usage status information of the electric tool 100, and an energy management unit 559 for adjusting the working status of the electric tool 100 according to the usage status information collected by the energy control unit 556. The energy management system 562 can be used to execute the aforementioned energy management method. The structure and function of the energy management system 562 and the aforementioned energy management system are basically the same, so the same content will not be repeated in the following specification.

As shown in Figs. 31-33, during the use of the electric tool 100 of this embodiment, the cutting knife 531a is driven by the drive assembly 560 to rotate at a high speed, and the knife tip 565 is used to break the grass. During the working process, a working space is formed between the wind blade 563 and the panel of the welding member 541, and the cutting knife 531a generates negative pressure around the wind blade 563 during high-speed rotation, so as to absorb the grass broken by the knife tip 565 to the periphery of the cutting knife 531a, and the airflow is generated along the rotation direction of the three cutting knives 531a to blow the broken grass out of the welding member 541 to complete the mowing work. However, due to the inconsistency of the amounts of broken grass of the three cutting knives 531a during the mowing process, the loads of the three cutting knives 531a are inconsistent, thereby further leading to inconsistency of the actual power used by the three drive assemblies 560.

As shown in Figs. 31-33, the remaining power of the battery assembly 555 in each electric tool 100 will differ greatly after the electric tool 100 is used for a period of time. The energy management system 562, which is electrically connected to the drive motor 560 (i.e., the drive assembly) and the battery assembly 555, respectively, begins to evaluate the power of the battery assembly 555 in the three groups of electric tools 100. Under the condition of ensuring the mowing effect of the electric tool 100, the rotation speed of the drive motor 560 corresponding to the battery assembly 555 with less remaining power is reduced within a certain range, thereby reducing the power of the drive motor 560 and the power consumption of the battery assembly 555, until the remaining power of the three groups of electric tools 100 reaches an equilibrium level or there is a set difference of power between the three groups of battery assemblies 555. Then the energy management system 562 controls the three groups of electric tools 100 to output according to the same output power. While ensuring the use effect of the electric tool 100, the energy management system 562 accurately monitors the discharge of each battery assembly 555, and the power of the drive motor 560 is controlled according to the power loss of the battery assembly 555 to maximize the working time of the electric tool 100.

As shown in Figs. 31-33, the energy management system 562 of the present disclosure includes an energy control unit 556 for collecting the usage status information of the electric tool 100, and an energy management unit 559 for issuing control instructions to the electric tool 100 according to the usage status information, so that the energy management system 562 can accurately collect and control the power consumption of the battery assembly 555 corresponding to each electric tool 100, and can adjust the usage status of the electric tool 100 according to changes in the usage status information, thereby ensuring that the loss of the battery assembly 555 corresponding to each electric tool 100 in all the electric tools 100 is approximately the same. While ensuring the working efficiency of the electric tool 100, the endurance time of the garden tool using the energy management system 562 and the energy management method is improved, so that the energy management system 562 has a high use efficiency and a good user experience.

As shown in Fig. 34, the present disclosure further provides an electric tool 100. The electric tool 100 includes a housing 567, a power supply assembly 565 and a drive assembly 569 disposed in the housing 567, and a working unit 531 and a walking assembly 566 connected to the housing 567. The power supply assembly 565 is used to provide power for the drive assembly 569, and the drive assembly 569 is used to drive the working unit 531 and the walking assembly 566, so that the electric tool 100 can move in the working area, and the corresponding garden work is completed through the working unit 531. The working unit 531 and the walking assembly 566 can also be defined as power consumption units.

As shown in Figs. 34-35, the power supply assembly 565 includes a battery pack 539, a battery pack compartment 568 for accommodating the battery pack 539, and a sensor 570a. One or more battery packs 539 can be provided, and each battery pack 539 can work independently, or can be connected in series or parallel to realize the output of electric energy.

As shown in Fig. 34, the battery pack compartment 568 is connected to the housing 567. A plurality of compartments (not labeled) for electrically connecting the battery packs 539 is disposed in the battery pack compartment 568, and the plurality of compartments is arranged in a regular manner to effectively reduce the size of the power supply assembly 565 to realize the miniaturization of the electric tool 100. In the present disclosure, the battery packs 539 are detachably connected to the battery pack compartment 568.

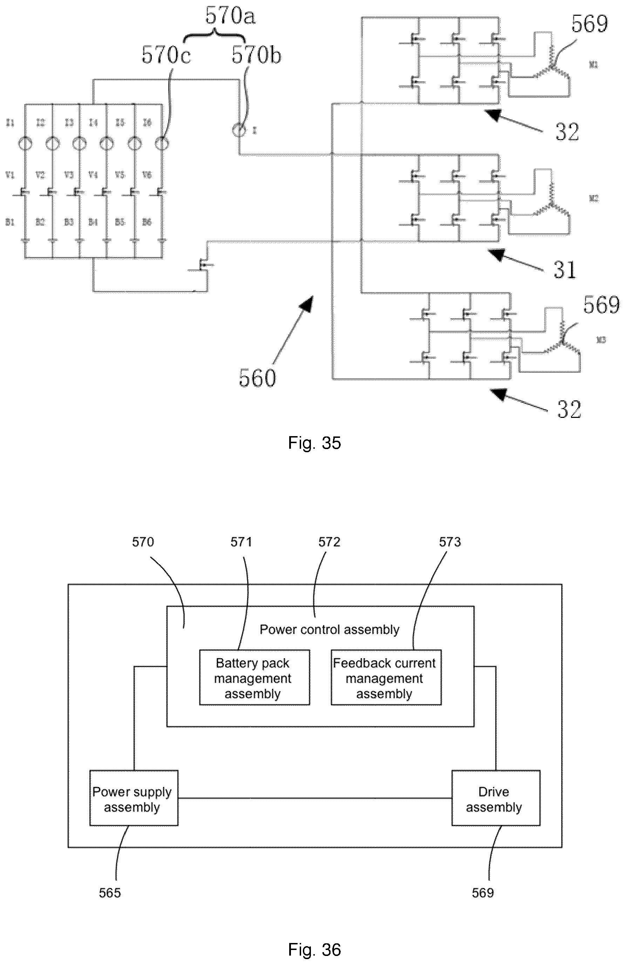

As shown in Fig. 35, the sensor 570a includes a first sensor 570b connected to the output circuit of the power supply assembly 565 and second sensors 570c electrically connected to each of the compartments respectively. In the present disclosure, the sensor 570a is used to obtain the charge and discharge parameters of the power supply assembly 565. It is defined that the maximum number of battery packs 539 that can be connected in the power supply assembly 565 is N, and the number of battery packs 539 that are actually connected in the power supply assembly 565 is n, and n≤N, the charge and discharge parameters include at least the acceptable charge capacity Q of n battery packs 539, the discharge rate C and the power SOC of each battery pack 539 in the n battery packs 539. In the present disclosure, the charge power Q is obtained by calculating at least the discharge rate C and the power SOC of the n battery packs 539.

As shown in Fig. 35, the charge and discharge parameters also include the total current size and total current direction of the power supply assembly 565 obtained by the first sensor 570b, and parameters related to the performance of the battery pack 539, such as the size of the sub-current, the direction of the sub-current, voltage, temperature, fault information, and remaining power of the battery pack 539 connected in the power supply assembly 565 obtained by the second sensor 570c. In addition, the discharge rate C and the power SOC are also obtained by the second sensor 570c.

As shown in Fig. 35, the drive assembly 569 includes a first motor 31 drivingly connected to the working unit 531 and a second motor 32 drivingly connected to the walking assembly 566. In a preferred embodiment of the present disclosure, multiple first motors 31 are provided at the same time, multiple second motors 32 are provided at the same time, and they are provided in one-to-one correspondence with the walking wheels 51 in the walking assembly 566.

As shown in Fig. 36, the electric tool 100 further includes a power management unit 570, and the power management unit 570 includes a power control module 572, a battery pack management module 571 and a feedback current management module 573 electrically connected to the power control module 572, respectively.

As shown in Fig. 36, the battery pack management module 571 is electrically connected to the power supply assembly 565, and is used to obtain the charge and discharge parameters of the power supply assembly 565. The feedback current management module 573 is electrically connected to the drive assembly 569 to obtain feedback information of the drive assembly 569. The power control module is used to receive charge and discharge parameters and feedback information, and control the drive assembly 569 to reversely charge the power supply assembly 565 according to the charge and discharge parameters and the feedback information, or realize the direct release of the feedback current through the drive assembly 569. The feedback information includes at least the feedback power AH generated when the first motor 31 and the second motor 32 in the drive assembly 569 decelerate/overspeed.

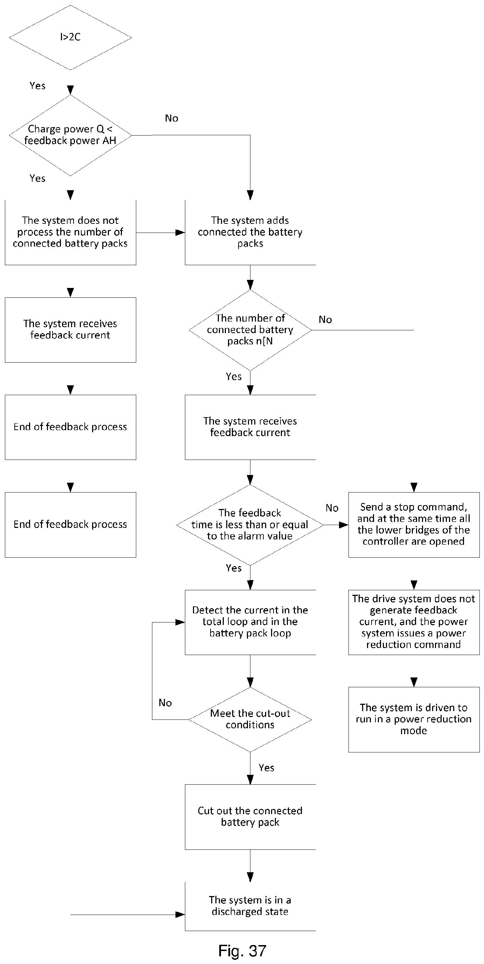

As shown in Figs. 35-37, the feedback current management module 573 is electrically connected to the second sensor 570c for obtaining feedback information of the drive assembly 569. The output circuit is in control connection with the power control module 572, and can be turned on/off under the control of the power control module 572. The feedback information in the present disclosure also includes a feedback current I and a feedback time T, and the feedback power AH is at least related to the feedback current I and the feedback time T.

As shown in Figs. 35-37, the walking assembly 566 of the electric tool 100 has three feedback braking situations during operation. One is that the second motor 32 corresponding to the walking assembly 566 exceeds the maximum speed provided by the electric tool 100. At this time, the second motor 32 can directly feed back electrical energy to the power supply assembly 565 through the feedback circuit in the feedback current management module 573, and at the same time provide electromagnetic torque for braking, which may occur when downhill, for example.

As shown in Figs. 35-37, another situation occurs in the deceleration process of the walking assembly 566 during normal driving. At this time, the second motor 32 is in the power generation status to generate feedback current, and the feedback circuit feeds back part of the feedback current to the power supply assembly 565, and continuously charges the power supply assembly 565 during this process. The third feedback braking situation is that when the second motor 32 is powered off, the working unit 531 continues to rotate under the action of inertia. At this time, the second motor 32 will also generate feedback current. That is, in the present disclosure, the feedback power AH is at least jointly determined by the aforementioned three feedback braking situations.

As shown in Figs. 35-37, the power control module 572 is used to receive the charge power Q and the feedback power AH, and determine the magnitude of the charge power Q and the feedback power AH, to control the drive assembly 569 to perform reverse charging for the power supply assembly 565 or directly realize the consumption of the feedback power AH through the drive assembly 569.

As shown in Figs. 35-37, the maximum number of battery packs 539 that can be connected in the power supply assembly 565 is defined as N, and the number of battery packs 539 that are actually connected in the power supply assembly 565 is n, and n≤N, then the charge power Q is defined by the number n of battery packs connected in the power supply assembly, the discharge rate C and the power SOC of each connected battery pack based on calculation of the power control module 572. When N battery packs 539 are connected in the power supply assembly 565 at the same time, the power supply assembly 565 has the maximum charge power Qmax.

As shown in Figs. 35-37, when the second motor 32 is in a decelerating/overspeeding status and the first motor 31 and/or the second motor 32 generates feedback current, the power control module 572 calculates and compares the charge power Q, the maximum charge power Qmax, and the feedback power AH. Furthermore, when the charge power Q ≥ the feedback power AH, the power control module 572 reversely charges the n battery packs 539 through the drive assembly 569, and controls the charging time of the battery pack 539 according to the power SOC of each battery pack 539 to avoid overcharging the battery pack 539.

As shown in Figs. 35-37, when the charge power Q ≤ the feedback power AH ≤ the maximum charge power Qmax, the power control module 572 controls the battery pack 539 in the released status in the power supply assembly 565 to connect, so that the adjusted charge power Q' ≥ the feedback power AH. Then the power control module 572 reversely charges each battery pack 539 in the power supply assembly 565 through the drive assembly 569. Similarly, in this process, the power control module 572 can still control the charging time of the battery pack 539 according to the power SOC of each battery pack 539 to prevent the battery pack 539 from overcharging.

As shown in Figs. 35-37, when the charge power Q<the maximum charge power Qmax<the feedback power AH, the power control module 572 realizes the release of the feedback power AH through the drive assembly 569; or the power control module 572 controls all the N battery packs 539 to be connected to the power supply assembly 565, and reversely charges the N battery packs 539 through the drive assembly 569 until the charge power Q is equal to the maximum charge power Qmax. The power control module 572 controls the drive assembly 569 to stop supplying power to the power supply assembly 565, and realizes the release of the remaining feedback power AH through the drive assembly 569.

As shown in Figs. 35-37, a switch member 569 is provided in the second motor 32. The switch member 569 is in control connection with the power control module 572. The switch member 569 can be turned on under the control of the power control module 572, and release the feedback current I or the remaining feedback power AH generated by the first motor 31 and/or the second motor 32 through the motor internal resistance of the second motor 32.

As shown in Figs. 35-37, only the power control module 572 is used to control the battery pack 539 in the released status connected in the power supply assembly 565, so that the feedback current I can fully or partially act on the battery pack 539. The utility of the electric tool 100 is improved while the loss of the feedback current I is avoided. In fact, the power control module 572 can also control the battery pack 539 in the power supply assembly 565 to release according to the charge power Q and the feedback power AH, so that the power of the battery pack 539 connected in the power supply assembly 565 is in an equilibrium state. During this process, the power control module 572 can evaluate the remaining power of each battery pack 539 connected in the battery pack compartment 568 to release the fully charged battery pack 539.

As shown in Figs. 35-37, in the foregoing specification, only the number n of battery packs 539 connected in the power supply assembly 565 is used as an example. In fact, the calculation of the number n of battery packs by the power control module 572 is also related to the temperature t and the power SOC of the battery packs 539. Specifically, taking the temperature t=40°C as an example, the power control module 572 detects that the charge power Q<the feedback power AH, and the feedback current I≤2 times the discharge rate C, and the power control module 572 evaluates that when the power SOC of the power supply assembly 565 is greater than or equal to 90%, the power control module 572 will connect two battery packs 539 to the feedback circuit at the same time to receive the feedback current I. If the number n of available battery packs 539 is less than two at this time, the power control module 572 can give an alarm and control the electric tool 100 to take a speed reduction action, and the switch member 569 in the second motor 32 is turned on, so that the feedback power AH is consumed on the internal windings of the second motor 32 and is not fed back to the power supply assembly 565, thereby ensuring the safety of the battery pack 539.

Table 1 shows the relationship between the feedback current I, the discharge rate C of the battery pack 539, the number n of the battery pack 539, the temperature t of the battery pack 539, and the power SOC of the power supply assembly 565 and the drive assembly 569 during the use process of the power management unit 570 according to a preferred embodiment of the present disclosure.

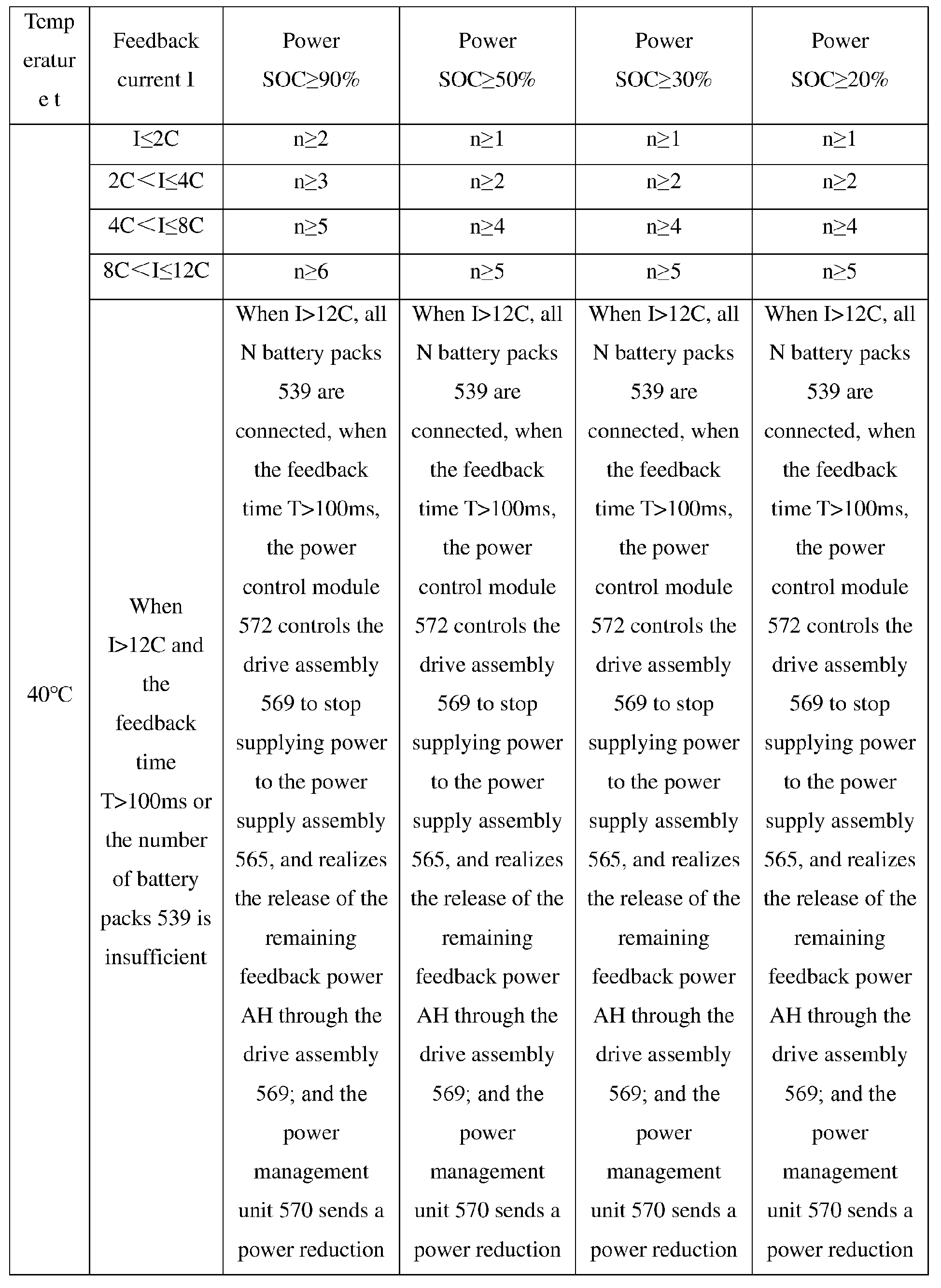

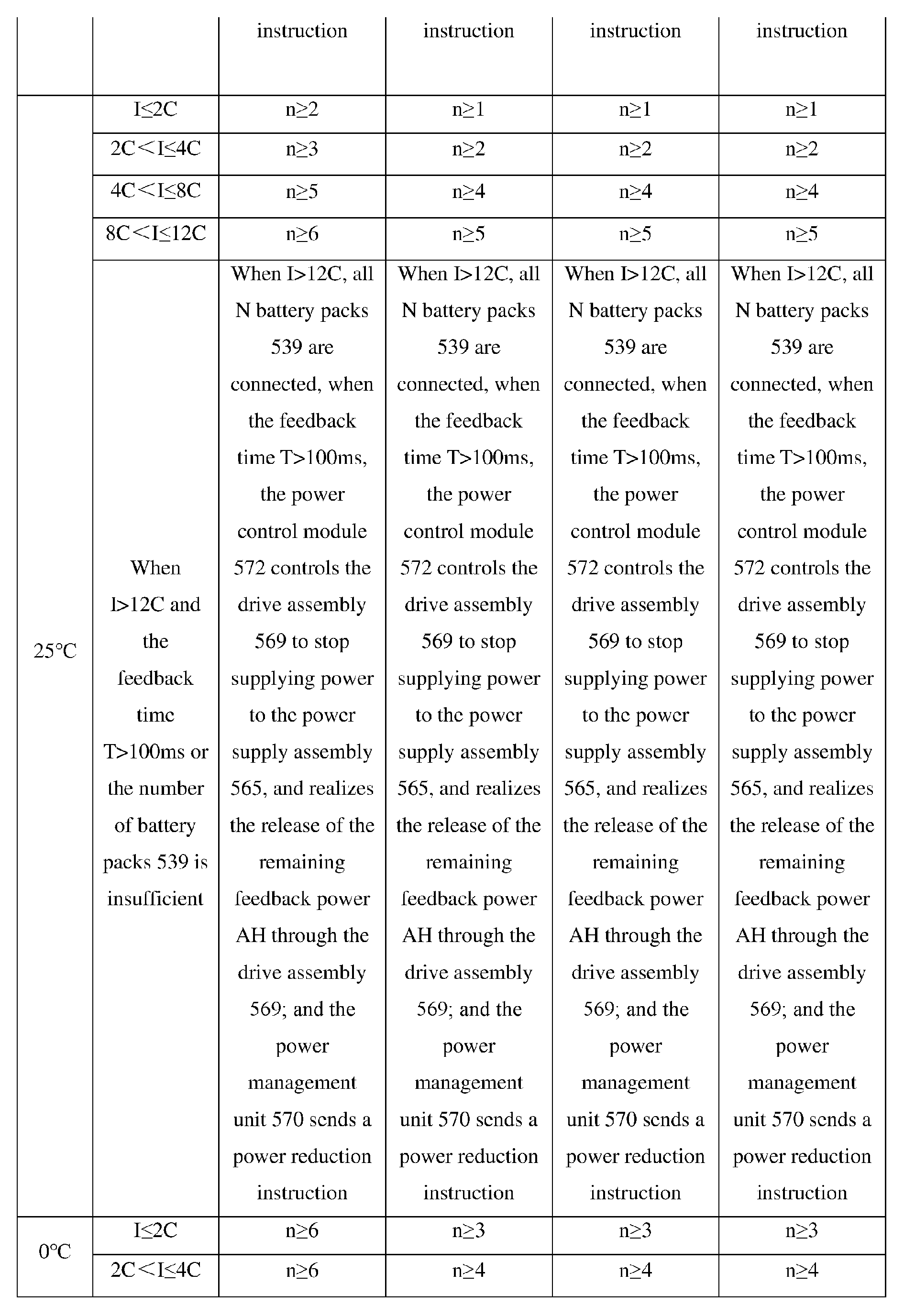

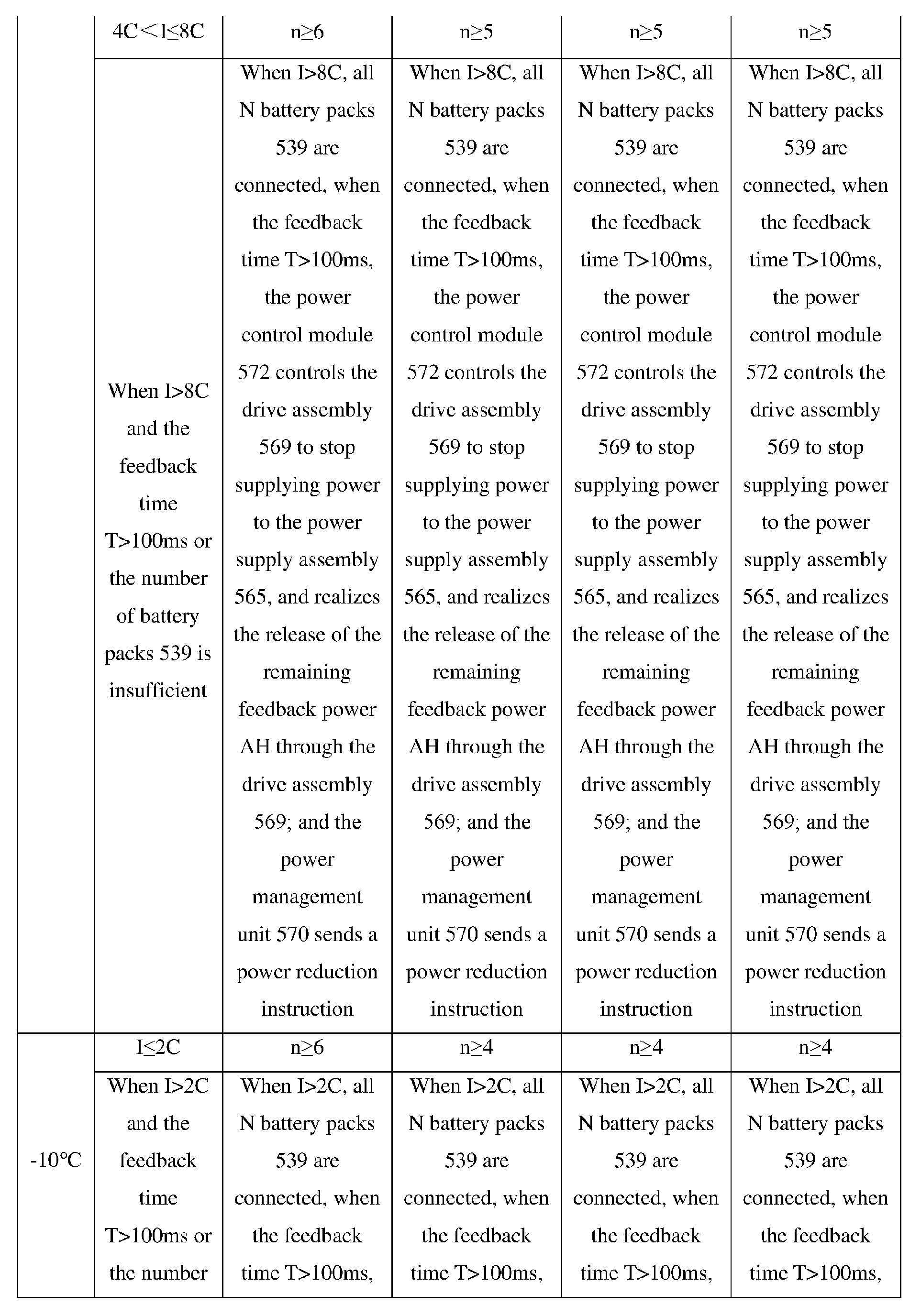

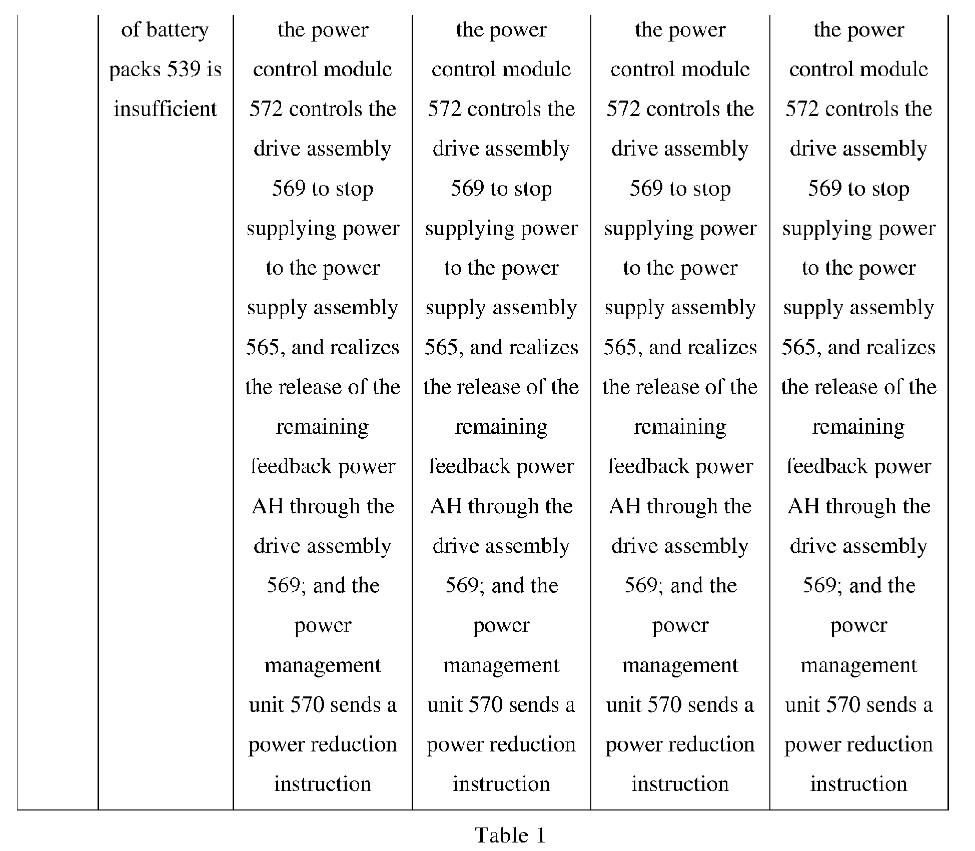

As shown in Figs. 35-37, in this example, the power control module 572 estimates that the power SOC of the power supply assembly 565 is greater than or equal to 90%. In other embodiments of the present disclosure, the power SOC may also be 50% or 30% and 20%. The smaller the power SOC, the greater the charge power Q of the power supply assembly 565, and the larger the number n of battery packs 539 that need to be connected in the power supply assembly 565. In this case, it only needs to ensure that the charge power Q is less than the feedback power AH.

In this specification and the drawings, that the electric tool 100 being an electric lawn mower is taken as an example for illustration. In other embodiments of the present disclosure, the electric tool 100 may also be an electric drill, a chain saw, a table saw, a lawn mower, a string trimmer, a hair dryer, etc., which are commonly used electric tools that also have a power supply assembly 565, a drive assembly 569, and a power management unit 570.

As shown in Figs. 34-37, the electric tool 100 of the present disclosure includes a power control assembly 570 connected to the power supply assembly 565 and the drive assembly 569 respectively. Therefore, the electric tool 100 can automatically and timely connect the battery pack 539 in the released state to the feedback circuit according to the state of the battery pack 539 in the electric tool 100, and jointly absorb the feedback current I generated by the drive assembly 569, to prevent a single battery pack 539 from being overcharged, thereby prolonging the life of the battery pack 539, effectively utilizing and releasing the feedback current I generated by the drive assembly 569, and improving the working efficiency of the electric tool 100.

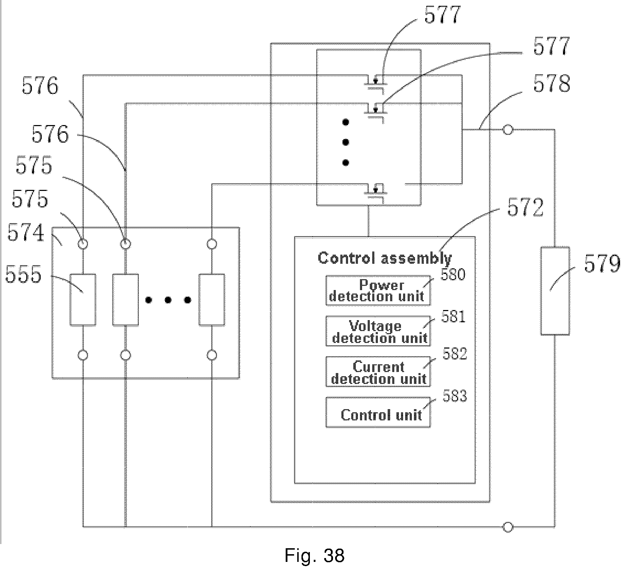

As shown in Fig. 38, the present disclosure provides a battery assembly management device for controlling a plurality of battery assemblies 555 to work in parallel to supply power to a load 579. The battery assembly management device includes a battery compartment 574 for accommodating the battery assembly 555, a control assembly 572, and an output branch 578.

As shown in Fig. 38, the battery compartment 574 includes at least two battery interfaces 575. Each battery interface 575 is used to connect to the battery assembly 555. Each battery interface 575 and the battery assembly 555 connected to it form a power supply branch 576. In practical applications, the number of the battery interfaces 575 can be set as required. The specifications of the multiple battery assemblies 555 connected to the battery interfaces 575 may be the same or different. Each power supply branch 576 is further provided with a switch 577, and the other end of the switch 577 is connected to the output branch 578, so that the on-off between the power supply branch 576 and the output branch 578 is controlled through the switch 577. In this embodiment, the switch 577 is a switch transistor. The control assembly 572 includes a power detection unit 580 to detect the power of the battery assembly 555, a voltage detection unit 581 to detect the voltage of the battery assembly 555, a current detection unit 582 to detect the current of the power supply branch 576 and the output branch 578, and a control unit 583.

As shown in Fig. 38, during use, the control unit 583 obtains the internal information of the battery assembly 555 through the battery interface 575, and determines whether the battery assembly 555 is abnormal according to the internal information. If the battery assembly 555 is abnormal, the control unit 583 controls the power supply branch 576 corresponding to the battery assembly 555 to stop working, and sends an alarm message to notify the user of the abnormal battery assembly 555. The abnormality may include the lack of a single battery in the battery assembly, excessively high voltage of a single battery or battery pack, excessively low voltage of a single battery or battery pack, excessively high temperature of a single battery or battery pack, etc. In this embodiment, the control unit 583 controls whether the power supply branch 576 works or not by controlling the switch 577. The control unit 583 controls the power detection unit 580 to work, to detect the power of the battery assembly 555 corresponding to each power supply branch 576. If the number of battery assemblies 555 whose power is greater than the first power threshold Q₁ is not less than N₁, the control unit 583 directly or indirectly controls the upper limit of the output current of each battery assembly 555 to be the rated current Iₘ of the battery assembly 555. If the number of battery assemblies 555 whose power is greater than the first power threshold Q₁ is less than N₁, and the number of battery assemblies 555 whose power is greater than the second power threshold Q₂ is not less than N₂, the control unit 583 directly or indirectly controls the upper limit of the output current of each battery assembly 555 to k₁^{∗}Iₘ. If the number of battery assemblies 555 whose power is greater than the second power threshold Q₂ is less than N₃, the control unit 583 directly or indirectly controls the upper limit of the output current of each battery assembly 555 to k₂^{∗}Iₘ, where Q₁>Q₂, 0<k₂<k₁<1. The direct control means that the control unit 583 reduces the current output or the upper limit of the current output of the power supply branch 576 by controlling the duty ratio of the control signal of the switch 577. The indirect control means that the control unit 583 sends a current limiting signal to the load 579, so as to indirectly achieve the purpose of reducing the upper limit of the output current of the battery assembly 555 by means of self-limiting power of the load 579. The first power threshold Q₁ and the second power threshold Q₂ may refer to power or a percentage of power. The N₁, N₂, N₃, k₁, k₂ may be set as required. For example, N₁is set to 4, N₂ is set to 2, Nsis set to 2, k₁ is set to 60%, and k₂ is set to 50%. This arrangement can effectively prevent the battery assembly 555 from over-discharging, thereby protecting the battery assembly 555 and prolonging the service life of the battery assembly 555.

As shown in Fig. 38, the control unit 583 determines the priority level of each power supply branch 576 according to the level of power, and then controls the power supply branch 576 with the highest priority to supply power to the load 579. When the difference between the power of the currently working battery assembly 555 and the power of the battery assembly 555 of the power supply branch 576 corresponding to the next priority level is within the first power range, the control unit 583 controls the power supply branch 576 corresponding to the next priority level to work, and is connected in parallel with the currently working power supply branch 576 to supply power to the load 579. The size of the first power range may be set as needed. In other embodiments, the control unit 583 may also determine the priority level of each power supply branch 576 according to the percentage of power, and then control the power supply branch 576 with the highest priority to supply power to the load 579. The power percentage is the ratio of the current power of the battery assembly 555 to the rated power. When the difference between the power percentage of the currently working battery assembly 555 and the power percentage of the battery assembly 555 of the power supply branch 576 corresponding to the next priority level is within the first proportional range, the control unit 583 controls the power supply branch 576 corresponding to the next priority level to work, and is connected in parallel with the currently working power supply branch 576 to supply power to the load 579. The size of the first percentage range may be set as needed. It is understandable that the control unit 583 may also determine the priority level of each power supply branch 576 according to the voltage level, and then control the power supply branch 576 with the highest priority to supply power to the load 579. When the difference between the voltage of the currently working battery assembly 555 and the voltage of the battery assembly 555 of the power supply branch 576 corresponding to the next priority level is within the first voltage range, the control unit 583 controls the power supply branch 576 corresponding to the next priority level to work, and is connected in parallel with the currently working power supply branch 576 to supply power to the load 579. The first voltage range may be 3V-5V. The first voltage range may also be set as needed.

As shown in Fig. 38, when the voltage detection unit 581 detects that the voltage of the battery assembly 555 is greater than the overvoltage value or less than the undervoltage value, the control unit 583 controls the switch 577 of the power supply branch 576 corresponding to the battery assembly 555 to be turned off, so that the power supply branch 576 corresponding to the battery assembly 555 stops working, thereby protecting the battery assembly 555.

As shown in Fig. 38, when the current detection unit 582 detects that the current of the power supply branch 576 is greater than the first current threshold or less than the second current threshold, the control unit 583 controls the power supply branch 576 to stop working, to protect the battery assembly 555 corresponding to the power supply branch 576 and the load 579. The first current threshold is the maximum current allowed by the power supply branch 576. The second current threshold is the minimum current value allowed by the power supply branch 576, and is usually set to zero. When the current of the power supply branch 576 is less than zero, the battery assembly 555 corresponding to the power supply branch 576 is in a charging state.

As shown in Fig. 38, the control unit 583 also detects the number N of battery assemblies 555 currently working. The current detection unit 582 also detects the current of the output branch 578, that is, the total current I output by all the battery assemblies 555 currently working. If I>(N^{∗}Iₘ+ΔI), the control unit 583 directly or indirectly controls the battery assembly 555 to reduce the current output, where ΔI is a preset current offset. When I>(N^{∗}Iₘ+ΔI) and exceeds the preset time threshold, the control unit 583 directly or indirectly controls the battery assembly 555 to reduce the current output.

As shown in Fig. 38, the battery assembly management device of the present disclosure can intelligently limit the output current of the battery assembly 555 or intelligently switch the working mode of the load 579 according to the power, quantity, and other information of the battery assembly 555, thereby extending the working time of the load 579, avoiding the disadvantages of excessive use of the battery assembly 555, further protecting the battery assembly 555, prolonging the service life of the battery assembly 555, and improving the overall working efficiency of the load 579.

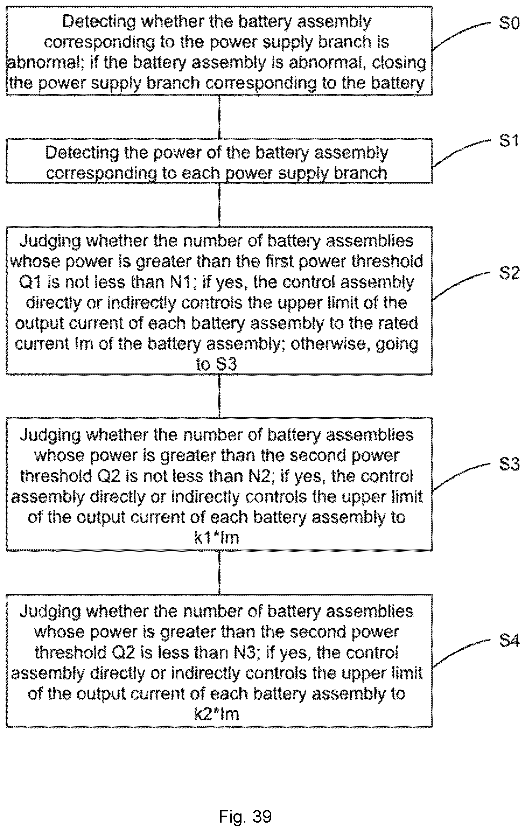

As shown in Fig. 39, the present disclosure further provides a battery assembly management method for controlling a plurality of battery assemblies 555 to work in parallel to supply power to a load 579. The battery assembly management method includes the following operations:
S0: detecting whether the battery assembly corresponding to the power supply branch is abnormal; if the battery assembly is abnormal, closing the power supply branch corresponding to the battery assembly;
S1: detecting the power of the battery assembly corresponding to each power supply branch;
S2: judging whether the number of battery assemblies whose power is greater than the first power threshold Q₁ is not less than N₁; if yes, the control assembly directly or indirectly controls the upper limit of the output current of each battery assembly to the rated current Iₘ of the battery assembly; otherwise, going to S3;
S3: judging whether the number of battery assemblies whose power is greater than the second power threshold Q₂ is not less than N₂; if yes, the control assembly directly or indirectly controls the upper limit of the output current of each battery assembly to k₁^{∗}Iₘ; where Q₁ >Q₂, 0<k₁<1;
S4: judging whether the number of battery assemblies whose power is greater than the second power threshold Q₂ is less than N₃; if yes, the control assembly directly or indirectly controls the upper limit of the output current of each battery assembly to k₂^{∗}Iₘ, where 0<k₂<k₁<1.

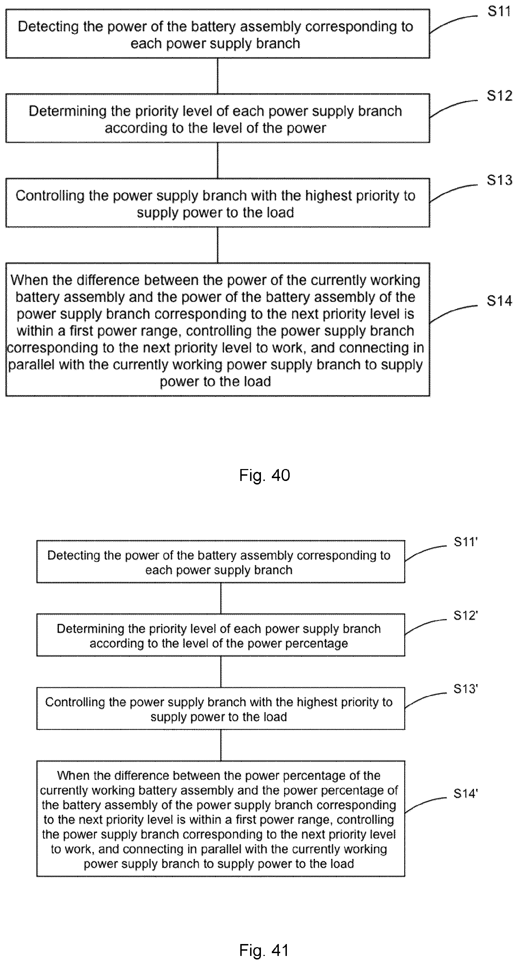

As shown in Fig. 40, S1 further includes the following operations:
S11: detecting the power of the battery assembly corresponding to each power supply branch;
S12: determining the priority level of each power supply branch according to the level of the power;
S13: controlling the power supply branch with the highest priority to supply power to the load;
S14: when the difference between the power of the currently working battery assembly and the power of the battery assembly of the power supply branch corresponding to the next priority level is within a first power range, controlling the power supply branch corresponding to the next priority level to work, and connecting in parallel with the currently working power supply branch to supply power to the load.

As shown in Fig. 41, in other embodiments, S1 may also include:
S11': detecting the power percentage of the battery assembly corresponding to each power supply branch;
S12': determining the priority level of each power supply branch according to the level of the power percentage;
S13': controlling the power supply branch with the highest priority to supply power to the load;
S14': when the difference between the power percentage of the currently working battery assembly and the power percentage of the battery assembly of the power supply branch corresponding to the next priority level is within a first percentage range, controlling the power supply branch corresponding to the next priority level to work, and connecting in parallel with the currently working power supply branch to supply power to the load.

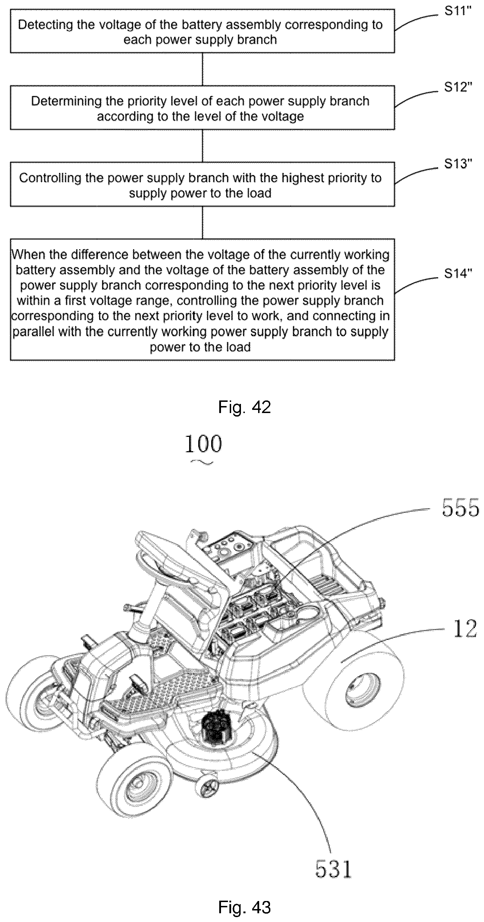

As shown in Fig. 42, S1 may also include:
S11": detecting the voltage of the battery assembly corresponding to each power supply branch;
S12": determining the priority level of each power supply branch according to the level of the voltage;
S13": controlling the power supply branch with the highest priority to supply power to the load;
S14": when the difference between the voltage of the currently working battery assembly and the voltage of the battery assembly of the power supply branch corresponding to the next priority level is within a first voltage range, controlling the power supply branch corresponding to the next priority level to work, and connecting in parallel with the currently working power supply branch to supply power to the load.

As shown in Fig. 43, the present disclosure further discloses an electric tool 100. The electric tool 100 includes a walking mechanism 12, a working unit 531, a control mechanism (not shown) for controlling the operation of the walking mechanism 12 and the working unit 531, a plurality of battery assemblies 555, and the battery assembly management device. In this embodiment, the working unit 531 may be a mowing assembly, but in other embodiments, the working unit 531 may also be other functional assemblies. In this embodiment, the control mechanism controls the walking mechanism 12 and the working unit 531 at the same time. However, in other embodiments, a walking control mechanism for controlling the walking mechanism 12 and a working control mechanism for controlling the working unit 531 may be separately provided. The battery assembly management device controls the plurality of battery assemblies 555 to work together in parallel to supply power to the walking mechanism 12 and the working unit 531. When the number of battery assemblies 555 whose power is greater than the first power threshold Q₁ is not less than N₁, the control unit 583 sends a performance priority signal to the control mechanism, and the control mechanism does not impose restrictions on the walking mechanism 12 and the working unit 531, the walking mechanism 12 may travel at a maximum speed of Vₘ, and the working unit 531 may work at a maximum rotation speed of Rₘ. At this time, the electric tool 100 is in the performance priority mode, that is, the first state, which can cope with the complicated and heavy-duty grass conditions. When the number of battery assemblies 555 whose power is greater than the first power threshold Q₁ is less than N₁, and the number of battery assemblies 555 whose power is greater than the second power threshold Q₂ is not less than N₂, the control unit 583 sends a current limiting signal to the control mechanism, and the control mechanism controls the walking mechanism 12 and the working unit 531 to run at a mid-range speed. At this time, the maximum operating speed of the walking mechanism 12 is k₃^{∗}Vₘ, and the maximum rotational speed of the working unit 531 is k₄^{∗}Rₘ, so that the output current of the battery assembly 555 is not greater than the upper limit k₁^{∗}Iₘ. At this time, the electric tool 100 is in the energy-saving mode, that is, the second state, which can cope with lighter grass conditions. When the number of battery assemblies 555 with power greater than the second power threshold Q₂ is less than N₃, the control unit 583 sends a current limiting signal to the control mechanism, and the control mechanism controls the walking mechanism 12 and the working unit 531 to run at a low speed. At this time, the maximum operating speed of the walking mechanism is k₅^{∗}Vₘ, and the maximum rotational speed of the working unit 531 is k₆^{∗}Rₘ, so that the output current of the battery assembly 555 does not exceed the upper limit k₂^{∗}Iₘ. At this time, the electric tool 100 is in the super energy-saving mode, that is, the third state, which can cope with simple grass conditions. In this embodiment, the number of the battery assemblies 555 is, for example, 6, the Q₁ is 50%, the Q₂ is 20%, the N₁is 4, the N₂ and N₃ are 2, the k₃ and k₄ are 0.6, and the k₅ and k₆ are 0.6. The values of Q₁, Q₂, N₁, N₂, N₃, k₃, k₄, k₅, and k₆ may also be set as required.

As shown in Fig. 43, when the number of battery assemblies 555 whose power is greater than the second power threshold Q₂ is less than N₃, the electric tool 100 is controlled to be in the third state; or when the number of battery assemblies 555 whose power is greater than the third power threshold Q3 is less than N₃, the electric tool 100 is controlled to be in the third state, where: Q3 ≦ Q2.

Therefore, the battery assembly management device of the present disclosure can intelligently switch the working mode of the load according to the power and quantity of the battery assemblies, thereby prolonging the working time of the load, avoiding the disadvantages of excessive use of the battery assemblies, and improving the overall working efficiency of the load.

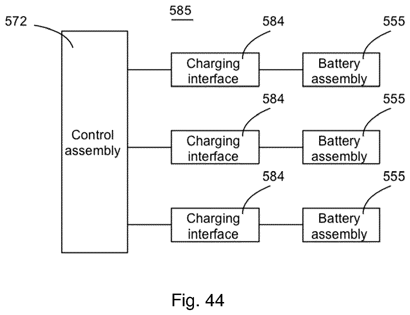

As shown in Fig. 44, the present disclosure discloses a charger 585. The charger 585 includes at least two charging interfaces 584 and a control assembly 572 for controlling the charging interfaces 584.

As shown in Figs. 44, the charging interface 584 is used to connect a battery assembly 555 (or a power supply unit) of the same specification to be charged. The charging interface 584 and the battery assembly 555 connected to it form a charging circuit. The battery assembly 555 may be a single battery or a battery pack including multiple single batteries. The charging circuit includes a switch (not shown) to be turned on or off under the control of the control assembly 572. The switch may be an MOS trasistor, a relay, and so on. Each of the charging circuits has a corresponding priority level and a level status corresponding to the priority level. The priority level is used to indicate the priority charging sequence of the charging circuit among all charging circuits. Usually, a number may be used to indicate the priority level. For example, it is supposed that a charger has three charging interfaces A, B, and C, and the priority level of the charging circuit corresponding to the charging interface B is set to 1, the priority level of the charging circuit corresponding to the charging interface A is set to 2, and the priority level of the charging circuit corresponding to the charging interface C is set to 3; when the charger is working, the charger first charges the battery assembly connected to the charging interface B, then charges the battery assembly connected to the charging interface A, and finally charges the battery assembly connected to the charging interface C, where the numbers 1, 2, 3 indicate the priority level of the charging circuit corresponding to the charging interfaces A, B, and C. It is understandable that there are many ways to express the priority levels, which will not be listed here. The control assembly 572 obtains the status information of the battery assembly 555 corresponding to each charging circuit before charging, and determines the priority level of the corresponding charging circuit and the level status corresponding to the priority level according to the status information of the battery assembly 555. The control assembly 572 communicates with the battery assembly 555 through a CAN bus or a serial port and obtains status information of the battery assembly 555. The status information is the remaining power of the battery assembly 555 before charging or the voltage before charging. The level status may be the remaining power of the battery assembly 555 before charging, or the ratio of the remaining power of the battery assembly 555 before charging to the capacity of the battery assembly 555. It is understandable that the level status may also be the voltage before the battery assembly 555 is charged, or the ratio of the voltage before the battery assembly 555 is charged to the voltage when the battery assembly 555 is fully charged. For example, it is supposed that a charger has three charging interfaces A1, B1, and C1, and the charger charges A1 battery pack, B1 battery pack, and C1 battery pack respectively. If the remaining power of A1 battery pack is 40% of the total power, the remaining power of B1 battery pack is 20% of the total power, and the remaining power of the C1 battery pack is 60% of the total power, then the priority level corresponding to the charging interface B1 is 1, and the corresponding level status is 20%; the priority level corresponding to the charging interface A1 is 2, and the corresponding level status is 40%; the priority level corresponding to the charging interface C1 is 3, and the corresponding level status is 60%. In this embodiment, each priority level corresponds to one charging interface 584 or charging circuit. However, in other embodiments, one priority level can also be set to correspond to multiple charging interfaces 584 or charging circuits. In this case, the multiple charging interfaces 584 or charging circuits corresponding to the priority level work simultaneously. For example, when the level status corresponding to any two charging circuits are the same, the priority levels corresponding to the two charging circuits are set to be the same. In other embodiments, the status information and level status information may also be represented by the time required for the battery assembly 555 to be fully charged.

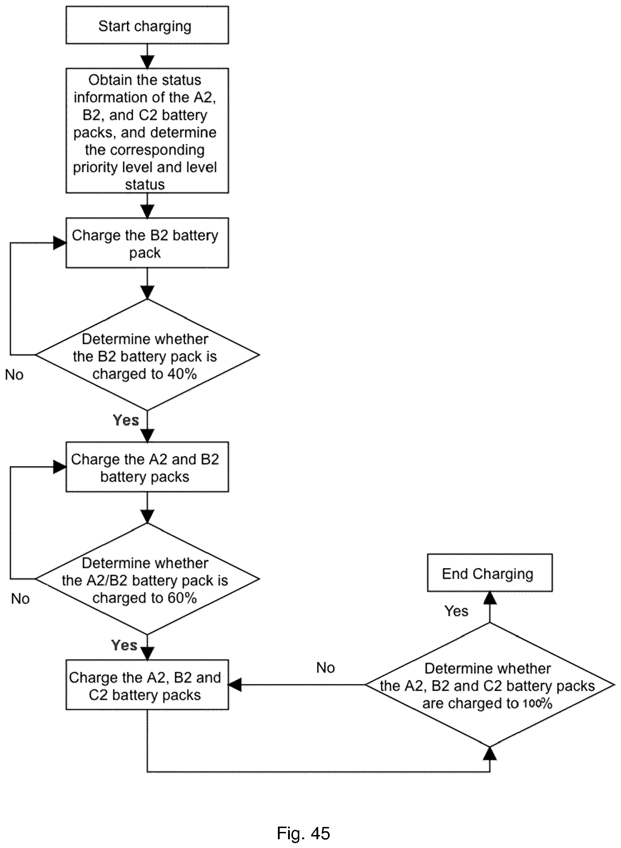

As shown in Figs. 44-45, the control assembly 572 sequentially controls the corresponding charging circuits to work according to the order of priority levels. When the currently working charging circuit charges the corresponding battery assembly 555 to the level status corresponding to the next priority level, the control assembly 572 controls the charging circuit corresponding to the next priority level to work with the currently working charging circuit, until all the charging circuits are in working status, so as to charge the battery assemblies 555 corresponding to the charging circuits to a fully charged status at the same time. Such a configuration can enable battery assemblies 555 of different powers to be fully charged at the same time, thereby effectively avoiding problems such as overcharging of the battery pack and discharging of the battery pack during charging, and further increasing the service life of the battery pack. For example, it is supposed that a charger has three charging interfaces A2, B2, and C2, and respectively charge A2 battery pack with 40% status information, B2 battery pack with 20% status information, and C2 battery pack with 60% status information; the control assembly 572 obtains the status information of the A2, B2, and C2 battery packs, and sorts them from small to large, so as to determine that the priority level corresponding to the A2 battery pack is 2, and the corresponding level status is 40%, the priority level corresponding to the B2 battery pack is 1, and the corresponding level status is 20%, the priority level corresponding to the C2 battery pack is 3, and the corresponding level status is 60%. Then, the control assembly 572 first controls the operation of the charging circuit corresponding to the B2 battery pack. When the B2 battery pack is charged to 40%, the control assembly 572 controls the charging circuit corresponding to the A2 battery pack to work with the charging circuit corresponding to the B2 battery pack. When the A2 or B2 battery pack is charged to 60%, the control assembly 572 controls the charging circuits corresponding to the A2, B2, and C2 battery packs to work at the same time to charge the A2, B2, and C2 battery packs to a fully charged status.

As shown in Figs. 44-45, before controlling the operation of the charging circuit, the control assembly 572 obtains the internal information of the battery assembly 555 and determines whether the battery assembly 555 is abnormal. If the battery assembly 555 is abnormal, the control assembly 572 closes the charging circuit corresponding to the battery assembly 555 and sends an abnormality signal. The abnormality may include the lack of a single battery in the battery pack, the excessively high voltage of the single battery, and so on. The abnormality signal may be represented by an indicator light corresponding to the charging interface 584. For example, the indicator light flashes to indicate that the battery assembly is abnormal. When the fault of the abnormal battery assembly 555 is eliminated, the control assembly 572 re-determines the priority level corresponding to each charging circuit. When the power or voltage of the battery assembly 555 after the fault is eliminated is less than the power or voltage of the battery assembly 555 corresponding to the currently working charging circuit, the control assembly 572 closes all the currently working charging circuits and controls the charging circuits corresponding to the battery assembly 555 after the fault is eliminated to work.

As shown in Figs. 44-45, when the control assembly 572 controls the charging circuit to work, the control assembly 572 simultaneously detects the charging temperature of the battery assembly 555 corresponding to the charging circuit. If the charging temperature is abnormal, the control assembly 572 controls the charging circuit to close, and at the same time sends an abnormality reminder.

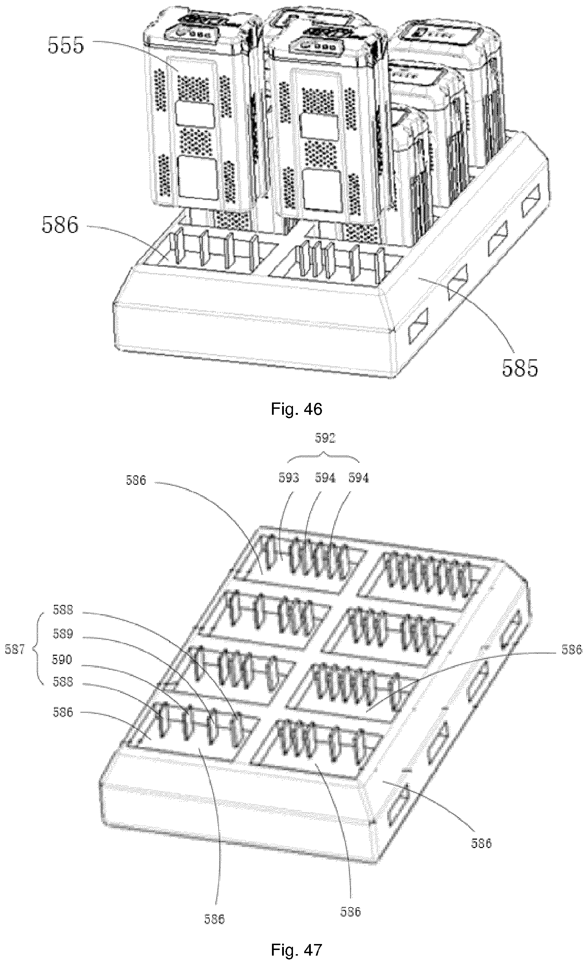

As shown in Figs. 46-47, the charger 585 includes a battery compartment 586 corresponding to the charging interface 584 and accommodating the battery assembly 555, and a detection sensor (not shown) for detecting whether the battery assembly 555 is in the battery compartment 586. When the detection sensor detects the battery assembly 555, and the control assembly 572 cannot obtain the status information of the corresponding battery assembly 555, the charger 585 sends an abnormality signal to remind the user that the battery assembly 555 is not well plugged in. The detection sensor may be a gravity sensor, a distance sensor, etc. installed in the battery compartment 586. The battery compartment 586 includes a conductive terminal group 587 and a positioning insert assembly 592 spaced at an interval from each other. The conductive terminal group 587 includes a pair of charging terminals 588, a communication terminal 590, and a charging positive electrode 589. The positioning insert assembly 592 includes a space 593 and a positioning plug piece 594. The battery compartment 586 determines the address through different combinations of the position and number of the space 593 and the positioning plug piece 594. For example, the logical address of the battery compartment 5861 is 000, the logical address of the battery compartment 5862 is 585, the logical address of the battery compartment 5863 is 110, and the logical address of the battery compartment 5864 is 011. The battery assembly 555 includes a positioning slot assembly (not shown) that cooperates with the positioning insert assembly 592. The control assembly 572 determines the address of the battery assembly 555 according to the corporation state of the positioning insert assembly 592 and the positioning slot assembly. In other embodiments, the control assembly 572 may also dynamically assign an address to the charging interface 584 connected to the battery assembly 555 or the corresponding charging circuit.

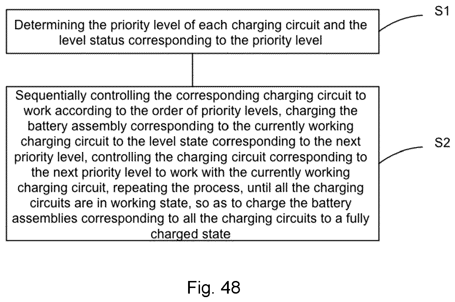

As shown in Fig. 48, the present disclosure further provides a charging control method. The method includes the following operations:
S1: determining the priority level of each charging circuit and the level status corresponding to the priority level.
S2: sequentially controlling the corresponding charging circuit to work according to the order of priority levels, charging the battery assembly corresponding to the currently working charging circuit to the level status corresponding to the next priority level, controlling the charging circuit corresponding to the next priority level to work with the currently working charging circuit, repeating the process, until all the charging circuits are in working status, so as to charge the battery assemblies corresponding to all the charging circuits to a fully charged status.

S1 further includes: detecting whether the battery assembly corresponding to the charging interface is abnormal; if the battery assembly is abnormal, closing the charging circuit corresponding to the battery assembly.

S2 further includes: when the charging circuit is working, detecting the charging temperature of the battery assembly corresponding to the charging circuit; if the charging temperature is abnormal, closing the charging circuit corresponding to the battery assembly.

Therefore, the charger 585 of the present disclosure can control the charging circuit positioning insert assemblies of different priority levels to work together according to the priority levels, so that the battery packs of different powers can be fully charged at the same time, thereby effectively avoiding the problems of battery pack overcharging and battery pack discharging during charging, and further increasing the service life of the battery pack.

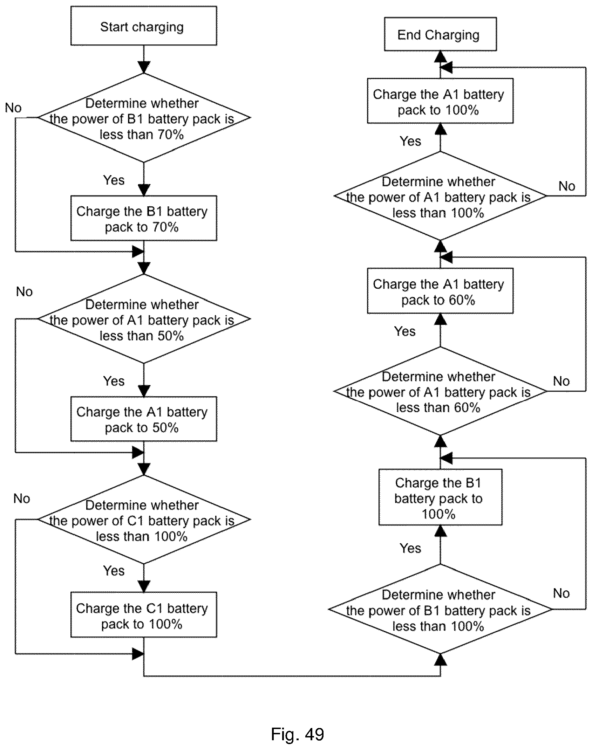

As shown in Figs. 44 and 49, the control assembly 572 sequentially controls the corresponding charging circuits to work according to the order of priority levels to charge the corresponding battery assembly 555 to the corresponding level status, then sequentially controls the corresponding charging circuits to work according to the order of priority levels again to charge the corresponding battery assembly 555 to the next corresponding level status, and repeats the process, until all the battery assemblies 555 are fully charged. For example, it is supposed that a charger has three charging interfaces A1, B1, and C1, with priority levels of 2, 1, and 3, respectively, and A1 battery pack, B1 battery pack, and C1 battery pack are charged respectively; The charging interface A1 has three levels of 50%, 60%, and 100%, the charging interface B1 has two levels of 70% and 100%, and the charging interface C1 has a level of 100%. When the charger is working, the charger first charges the B1 battery pack of the charging interface B1 to 70% of the total power, then charges the A1 battery pack of the charging interface A1 to 50% of the total power, then charges the C1 battery pack of the charging interface C1 to 100% of the total power, then charges the B 1 battery pack of the charging interface B1 to 100% of the total power, then charges the A1 battery pack of the charging interface A1 to 60% of the total power, and finally charges the A1 battery pack of the charging interface A1 to 100% of the total power. The control assembly 572 sequentially controls the corresponding charging circuit to work once according to the order of priority levels to charge the corresponding battery assembly 555 to a corresponding level status. This process is defined as a charging round.

As shown in Fig. 49, before controlling the operation of the charging circuit, the control assembly 572 obtains the status information of the battery assembly 555 and determines whether the battery assembly 555 is abnormal. If the battery assembly 555 is abnormal, the control assembly 572 closes the charging circuit corresponding to the battery assembly 555, sends an abnormality signal, and kicks the charging interface 584 corresponding to the battery assembly 555 out of the current charging round. The abnormality may include the lack of a single battery in the battery pack, the excessively high voltage of the single battery, and so on. The abnormality signal may be represented by an indicator light corresponding to the charging interface 584. For example, the indicator light flashes to indicate that the battery assembly is abnormal. When the fault of the battery assembly 555 is eliminated, the control assembly 572 re-determines the priority level corresponding to each charging interface 584 and starts a new charging round. The control assembly 572 may also re-determine the priority levels of all the charging interfaces 584 after the charging round in the current priority level order is completed.

As shown in Fig. 49, the charger 585 includes a battery compartment (not shown) corresponding to the charging interface 584 and accommodating the battery assembly 555, and a detection sensor for detecting whether the battery assembly 555 is in the battery compartment. When the detection sensor detects the battery assembly 555, and the control assembly 572 cannot obtain the status information of the corresponding battery assembly 555, the charger 585 sends an abnormality signal to remind the user that the battery assembly 555 is not well plugged in. The detection sensor may be a gravity sensor, a distance sensor, etc. installed in the battery compartment.

As shown in Fig. 49, when the control assembly 572 controls the charging circuit to work, the control assembly 572 simultaneously detects the charging temperature of the battery assembly 555 corresponding to the charging circuit. If the charging temperature is abnormal, the control assembly 572 controls the charging circuit to close, sends an abnormality signal, and kicks the charging interface 584 corresponding to the charging circuit out of the current charging round.

As shown in Fig. 49, each level status has a first level status value and a second level status value. The control assembly 572 first determines whether the battery assembly 555 corresponding to the charging interface 584 meets the first level status value; if the battery assembly 555 corresponding to the charging interface 584 meets the first level status value, the control assembly 572 closes the charging circuit corresponding to the charging interface 584; if the battery assembly 555 corresponding to the charging interface 584 does not meet the first level status value, the control assembly 572 controls the charging circuit corresponding to the charging interface 584 to work to charge the battery assembly 555 corresponding to the charging interface 584 to the second level state value. It can be understood that the first level status value and the second level status value may be equal or different. The following is an example. It is supposed that a battery pack has a charging interface A2, a charging interface B2, and a charging interface C2 with priority levels of 1, 2, and 3, respectively, and A1 battery pack, B1 battery pack, and C1 battery pack are charged respectively. The charging interface A2 has a level A status and a level B status, the charging interface B2 has a level C status and a level D status, and the charging interface C2 has a level E status. The first level status value of the level A status is 50%, and the second level status value of the level A status is 60%. The first level status value and the second level status value of the level B status are both 100%. The first level status value of the level C status is 80%, and the second level status value of the level C status is 90%. The first level status value and the second level status value of the level D status are both 100%. The first level status value and the second level status value of the level E status are both 100%.

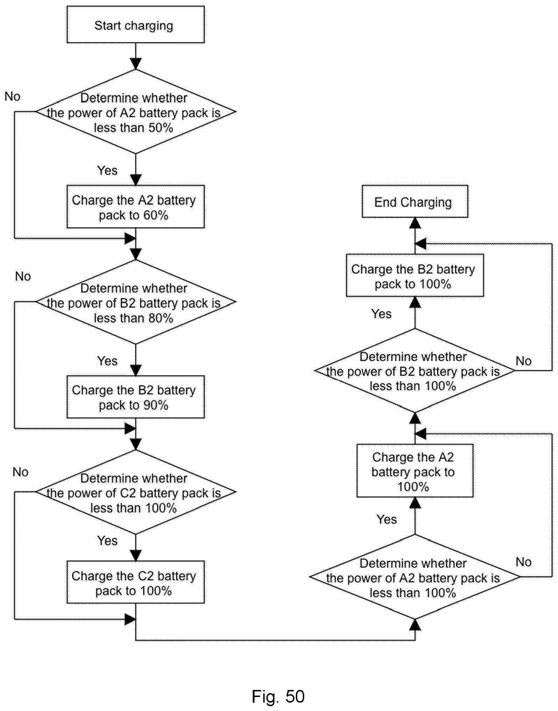

As shown in Fig. 50, the working sequence of the charger is as follows:
P1: Determining whether the power of the A2 battery pack is less than 50%; if yes, charging the A2 battery pack to 60%, and then going to P2.
P2: Determining whether the power of the B2 battery pack is less than 80%; if yes, charging the B2 battery pack to 90%, and then going to P3.
P3: Determining whether the power of the C2 battery pack is less than 100%; if yes, charging the C2 battery pack to 100%, and then going to P4.
P4: Determining whether the power of the A2 battery pack is less than 100%; if yes, charging the A2 battery pack to 100%, and then going to P5.
P5: Determining whether the power of the B2 battery pack is less than 100%; if yes, charging the B2 battery pack to 100%.

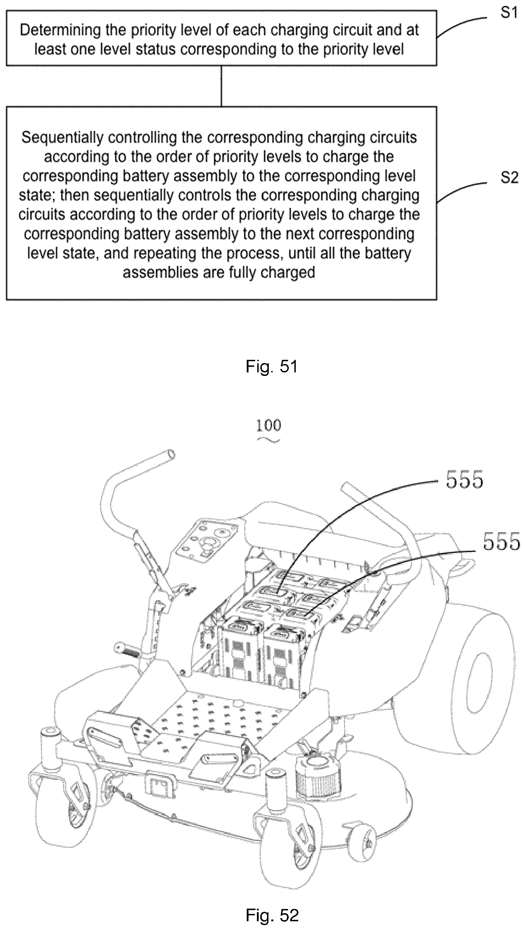

As shown in Fig. 51, the present disclosure further provides a charging control method. The method includes the following operations:
S1: determining the priority level of each charging circuit and at least one level status corresponding to the priority level;
S2: sequentially controlling the corresponding charging circuits according to the order of priority levels to charge the corresponding battery assembly to the corresponding level status; then sequentially controlling the corresponding charging circuits according to the order of priority levels to charge the corresponding battery assembly to the next corresponding level status, and repeating the process, until all the battery assemblies are fully charged.

S1 further includes: detecting whether the battery assembly corresponding to the charging interface is abnormal; if the battery assembly is abnormal, closing the charging circuit corresponding to the battery assembly.

S2 further includes: after completing a charge in the priority level order, that is, after completing a charge round, re-determining the priority level of each charging circuit.

As shown in Fig. 52, the present disclosure further discloses an electric tool 100. The electric tool 100 includes at least two battery assemblies 555 and a charging system. The battery assembly 555 is installed on the electric tool 100 and supplies power to the electric tool 100. The charging system and the electric tool 100 may be arranged as separate structures, or may be arranged as an integral structure, that is, the charging system is fixedly installed on the electric tool 100. The charging system includes at least two charging interfaces and a control assembly that are matched with the battery assembly 555. The structure of the charging interface and the control assembly and the mutual cooperation relationship between the charging interface and the control assembly are the same as those of the charging interface 584 and the control assembly 572 described above.

Therefore, the charger 585 of the present disclosure can intelligently charge several battery packs step by step according to the priority levels, so that the powers of the several battery packs are matched with each other, and the several battery packs cooperate to supply power to the device, which is convenient for the user to use the device in an emergency, thereby effectively improving the user experience.

The above description is only a preferred embodiment of the present disclosure and an explanation of the technical principles used. Those skilled in the art should understand that the scope involved in the present disclosure is not limited to the technical solution formed by the specific combination of the above technical features, but should also cover other technical solutions formed by any combination of the above technical features or their equivalents without departing from the concept of the present disclosure, such as technical solutions formed by replacing the above-mentioned features with the technical features disclosed (but not limited to) in the present disclosure with similar functions.

## Claims

1. An electric vehicle, comprising:
a main body;
a first power consumption unit and a second power consumption unit connected to the main body, respectively; and
a battery system, including a first power supply unit and a second power supply unit, wherein the first power supply unit and the second power supply unit each include at least one battery pack, the first power supply unit supplies power to the first power consumption unit, and the second power supply unit supplies power to the second power consumption unit;
wherein the at least one battery pack supplies power to a handheld tool.

2. The electric vehicle according to claim 1, wherein the battery system further comprises a battery accommodating part, and the first power supply unit and the second power supply unit are provided in the battery accommodating part.

3. The electric vehicle according to claim 1, wherein the number of the battery packs in the first power supply unit and the second power supply unit are the same or different.

4. The electric vehicle according to claim 1, wherein the first power consumption unit and the second power consumption unit are detachably connected to the main body.

5. The electric vehicle according to claim 1, further comprising a manipulation unit disposed on the main body, wherein the manipulation unit is configured to control the electric vehicle.

6. The electric vehicle according to claim 5, wherein the manipulation unit is electrically connected to the first power consumption unit and the second power consumption unit.

7. The electric vehicle according to claim 5, wherein the manipulation unit further comprises a height adjustment unit for adjusting the height of the electric vehicle.

8. A battery system, comprising:
a first power supply unit, supplying power to the first power consumption unit; and
a second power supply unit, supplying power to the second power consumption unit;
wherein the first power supply unit and the second power supply unit both include at least one battery pack for supplying power to a handheld tool.

9. The battery system according to claim 8, further comprising a control assembly for switching a working status of the first power supply unit and the second power supply unit.

10. The battery system according to claim 9, further comprising a charge management component and a discharge management component electrically connected to the control assembly, respectively.

11. The battery system according to claim 10, wherein the charge management component comprises a power detection unit for detecting the power of the first power supply unit and the second power supply unit.

12. The battery system according to claim 11, wherein the discharge management component comprises a battery detection unit for detecting the number and output power of the battery packs in the first power supply unit or the second power supply unit.

13. The battery system according to claim 12, wherein the battery detection unit comprises:
a voltage balance member for balancing the voltage of each of the battery packs in the first power supply unit or the second power supply unit; and
a discharge switching member, configured to switch the first power supply unit or the second power supply unit in a discharge status.

14. The battery system according to claim 10, further comprising a battery protection component electrically connected to the charge management component and the discharge management component.

15. The battery system according to claim 9, wherein the control assembly further sets a charging threshold, and when the charge management component collects that the power of the first power supply unit or the second power supply unit is lower than the charging threshold and is connected to a charging device, the first power supply unit or the second power supply unit is controlled to charge according to an order of power from low to high.

16. The battery system according to claim 9, wherein the control assembly further sets a discharge threshold, and
when the discharge management component collects that a number of the battery packs in the first power supply unit is less than a preset number threshold, the control assembly switches the second power supply unit.

17. The battery system according to claim 9, wherein the control assembly further sets a discharge threshold, and when the discharge management component collects that an output power of the first power supply unit is less than a preset power threshold, the control assembly switches the second power supply unit.

18. The battery system according to claim 10, wherein the discharge management component further comprises an external power conversion module for realizing electric energy output.

19. The battery system according to claim 9, wherein the control assembly further comprises an energy management unit, wherein the energy management unit calculates a status difference between the first power consumption unit and the second power consumption unit according to usage status information.

20. The battery system according to claim 8, further comprising a battery accommodating part, wherein the first power supply unit and the second power supply unit are disposed in the battery accommodating part.
